# EUROPEAN PATENT APPLICATION

(11) **EP 4 576 892 A1**
(43) Date of publication of application: **25.06.2025**
(21) Application number: 23869689.2
(22) Date of filing: 01.06.2023
(51) Int. Cl.: H04W 60/00

(54) **COMMUNICATION METHOD AND APPARATUS**

(30) Priority: 30.09.2022 CN 202211231830
(71) Applicant: Huawei Technologies Co., Ltd., Shenzhen, Guangdong 518129 (CN)
(72) Inventor: LIAO, Ting, Shenzhen, Guangdong 518129 (CN); ZONG, Zaifeng, Shenzhen, Guangdong 518129 (CN); DU, Ruchuan, Shenzhen, Guangdong 518129 (CN); ZHENG, Xiaochun, Shenzhen, Guangdong 518129 (CN); ZHOU, Xiaoyun, Shenzhen, Guangdong 518129 (CN)
(74) Representative: Pfenning, Meinig & Partner mbB
(86) International application number: PCT/CN2023/097768
(87) International publication number: WO 2024/066436

(57) **Abstract**

This application discloses a communication method and apparatus. The method is as follows: A core network element may obtain first information of a target terminal device, where the first information may be used to determine second information, and the second information indicates a storage area corresponding to a first operation in the target terminal device. Then, the core network element may send the second information and indication information of the first operation to the target terminal device, and receive a result of performing the first operation by the target terminal device based on the second information. According to the method, when instructing to operate the target terminal device, the core network element sends, to the target terminal device, the second information indicating the storage area corresponding to the first operation in the target terminal device, so that the terminal device can determine the storage area corresponding to the first operation, thereby improving efficiency of operating the terminal device.

## Description

### CROSS-REFERENCE TO RELATED APPLICATIONS

This application claims priority to Chinese Patent Application No. 202211231830.6, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, in a passive IoT (Passive IoT) scenario, an IoT terminal device (for example, a radio frequency identification (radio frequency identification, RFID) apparatus) has a prospect of large-scale deployment and application. For example, in a logistics and warehousing scenario, an IoT terminal device can be used for goods inventory and tracking, and monitoring an environment and a goods status in a transportation process of high-value goods (for example, vaccines). For another example, in an industrial manufacturing scenario, an IoT terminal device may be used for monitoring an environment and a device status.

A passive or semi-passive IoT terminal device has a simple function, and therefore needs to rely on an external excitation to send information. The excitation is generally from a card reader (or a reader/writer). The card reader may be integrated into an access network device, and the access network device operates the IoT terminal device according to an instruction of a core network element.

In the conventional technology, a method that can efficiently operate an IoT device is urgently needed.

### SUMMARY

This application provides a communication method and apparatus, to improve efficiency of operating an internet of things terminal device.

According to a first aspect, an embodiment of this application provides a communication method. The method may be performed by a core network element, or may be performed by a component used in a core network element, for example, a chip or a processor. An example in which the method is performed by the core network element is used below for description. The core network element may obtain first information of a target terminal device, where the first information may be used to determine second information, and the second information indicates a storage area corresponding to a first operation in the target terminal device. Then, the core network element may send the second information and indication information of the first operation to the target terminal device, and receive a result of performing the first operation by the target terminal device based on the second information.

According to the method, when instructing to operate the target terminal device, the core network element sends the second information and the indication information of the first operation to the target terminal device, where the second information indicates the storage area corresponding to the first operation in the target terminal device, so that the terminal device can determine the storage area corresponding to the first operation, thereby improving efficiency of operating the terminal device.

In a possible design, the first information includes at least one of the following: a TID of the target terminal device, chip type information of the target terminal device, factory mark information of the target terminal device, storage area information of the target terminal device, and the second information. This design provides a plurality of pieces of first information that can be used to determine the second information, and implementation is relatively flexible.

In a possible design, the core network element may obtain the first information from the target terminal device. Optionally, the core network element may obtain the first information from the target terminal device in one of the following manners:
Manner 1: The core network element may send a first message to the target terminal device through an access network device, where the first message is used to trigger the target terminal device to initiate a random access procedure. Then, the core network element may receive a registration request from the target terminal device, where the registration request includes the first information. In the manner 1, the core network element may obtain the first information by using the registration request from the target terminal device. In this way, the core network element can obtain the first information from the target terminal device as early as possible.
Manner 2: After sending a read command to the target terminal device, the core network element may receive a read command response from the target terminal device. The read command is used to read the first information in the target terminal device, and the read command response includes the first information. In the manner 2, the core network element may trigger, by using the read command, the target terminal device to send the read command response to the core network element, where the read command response includes the first information. In this way, the core network element may obtain the first information from the target terminal device as required.

In a possible design, after determining that the target terminal device is a passive tag or a semi-passive tag, the core network element may send the read command to the target terminal device. According to this design, the core network element may send the read command to the target terminal device in a targeted manner, to obtain the first information of the target terminal device.

In a possible design, the core network element may obtain tag type indication information of the target terminal device from a first network element or the target terminal device, and determine, based on the tag type indication information, that the target terminal device is a passive tag or a semi-passive tag. According to this design, the core network element may flexibly determine whether the target terminal device is a passive tag or a semi-passive tag.

In a possible design, the core network element may obtain the first information from an application function network element. Optionally, the core network element receives a service request from the application function network element, where the service request includes the first information. According to this design, the core network element can obtain the first information as early as possible by using the service request.

In a possible design, when the first information includes one or more of the TID of the target terminal device, the chip type information of the target terminal device, and the factory mark information of the target terminal device, before the core network element sends the second information and the indication information of the first operation to the target terminal device, the core network element may obtain a correspondence between the first information and the storage area corresponding to the first operation in the target terminal device, and determine the second information based on the correspondence and the first information. According to this design, the core network element may determine the second information based on the correspondence between the first information and the storage area corresponding to the first operation in the target terminal device, and does not need to obtain the second information from another device. This can simplify a procedure of obtaining the second information, and improve efficiency of obtaining the second information.

In a possible design, the core network element may obtain the locally stored correspondence between the first information and the storage area corresponding to the first operation in the target terminal device, or obtain, from a second network element, the correspondence between the first information and the storage area corresponding to the first operation in the target terminal device. According to this design, the core network element may flexibly obtain the correspondence between the first information and the storage area corresponding to the first operation in the target terminal device.

In a possible design, when the first information includes one or more of the TID of the target terminal device, the chip type information of the target terminal device, and the factory mark information of the target terminal device, before the core network element sends the second information and the indication information of the first operation to the target terminal device, the core network element may send the first information to a third network element, and receive the second information determined by the third network element based on the first information. According to this design, the core network element may flexibly obtain the second information from the third network element.

In a possible design, when the first information includes the storage area information of the target terminal device, before the core network element sends the second information and the indication information of the first operation to the target terminal device, the core network element may determine the second information based on the storage area information of the target terminal device and the indication information of the first operation. According to this design, the core network element may determine the second information based on the storage area information of the target terminal device and the indication information of the first operation, and does not need to obtain the second information from another device. This can simplify a procedure of obtaining the second information, and improve efficiency of obtaining the second information.

In a possible design, the core network element may send an operation message to the target terminal device, where the operation message indicates to perform the first operation on the target terminal device, and the operation message includes the second information and the indication information of the first operation. According to this design, the core network element may send the second information and the indication information of the first operation to the target terminal device by using the operation message, which is easy to implement.

In a possible design, the first operation may be one or more of a read operation, a write operation, an access operation, a kill operation, a lock operation, a block write operation, a block erase operation, and an electronic product code EPC write operation.

In a possible design, the second information includes an identifier of the storage area corresponding to the first operation in the target terminal device. The second information may flexibly and conveniently indicate the storage area corresponding to the first operation in the target terminal device.

In a possible design, the second information further includes at least one of the following: a pointer value, indicating a position at which the first operation starts to be performed in the storage area; a length, indicating a length of data for performing the first operation in the storage area; and a mask or a wildcard mask, indicating a mask or a wildcard mask used to perform the first operation in the storage area. According to this design, the storage area corresponding to the first operation in the target terminal device may be accurately indicated.

According to a second aspect, an embodiment of this application provides a communication method. The method may be performed by a terminal device, or may be performed by a component used in a terminal device, for example, a chip or a processor. An example in which the method is performed by a target terminal device is used below for description. The target terminal device may send first information to a core network element, where the first information is used to determine second information, and the second information indicates a storage area corresponding to a first operation in the target terminal device. Then, the target terminal device may receive the second information and indication information of the first operation from the core network element, and send, to the core network element, a result of performing the first operation by the target terminal device based on the second information.

According to the method, when instructing to operate the target terminal device, the core network element may obtain the first information from the target terminal device, and send the second information and the indication information of the first operation to the target terminal device. The first information is used to determine the second information, and the second information indicates the storage area corresponding to the first operation in the target terminal device. The terminal device may determine the storage area corresponding to the first operation. This improves efficiency of operating the terminal device.

In a possible design, the first information includes at least one of the following: a TID of the target terminal device, chip type information of the target terminal device, factory mark information of the target terminal device, and storage area information of the target terminal device. This design provides a plurality of pieces of first information that can be used to determine the second information, and implementation is relatively flexible.

In a possible design, the target terminal device may receive a first message sent by the core network element through an access network device, where the first message is used to trigger the target terminal device to initiate a random access procedure. Then, the target terminal device may send a registration request to the core network element, where the registration request includes the first information. According to this design, the target terminal device may send the first information to the core network element by using the registration request. In this way, the core network element can obtain the first information from the target terminal device as early as possible.

In a possible design, after receiving a read command from the core network element, the target terminal device may send a read command response to the core network element. The read command is used to read the first information in the target terminal device, and the read command response includes the first information. According to this design, the target terminal device may send the read command response including the first information to the core network element based on the read command from the core network element. In this way, the target terminal device may send the first information based on a requirement of the core network element.

In a possible design, before receiving the read command from the core network element, the target terminal device may send tag type indication information of the target terminal device to the core network element, where the tag type indication information indicates that the target terminal device is a passive tag or a semi-passive tag. According to this design, the target terminal device may notify the core network element that the target terminal device is a passive tag or a semi-passive tag, so that the core network element sends the read command to the target terminal device in a targeted manner.

In a possible design, the target terminal device may receive an operation message from the core network element, where the operation message indicates to perform the first operation on the target terminal device, and the operation message includes the second information and the indication information of the first operation. According to this design, the target terminal device may obtain the second information and the indication information of the first operation by using the operation message, which is easy to implement.

In a possible design, the first operation is one or more of a read operation, a write operation, an access operation, a kill operation, a lock operation, a block write operation, a block erase operation, and an electronic product code EPC write operation.

In a possible design, the second information includes an identifier of the storage area corresponding to the first operation in the target terminal device. The second information may flexibly and conveniently indicate the storage area corresponding to the first operation in the target terminal device.

In a possible design, the second information further includes at least one of the following: a pointer value, indicating a position at which the first operation starts to be performed in the storage area; a length, indicating a length of data for performing the first operation in the storage area; and a mask or a wildcard mask, indicating a mask or a wildcard mask used to perform the first operation in the storage area. According to this design, the storage area corresponding to the first operation in the target terminal device may be accurately indicated.

According to a third aspect, an embodiment of this application provides a communication method. The method may be performed by a core network element, or may be performed by a component used in a core network element, for example, a chip or a processor. An example in which the method is performed by the core network element is used below for description. The core network element may receive a first request from an application function network element, where the first request is used to request to read data in a target terminal device, and the first request further indicates that a storage area of the target terminal device is a single storage area. The core network element may send a first message to the target terminal device through an access network device, where the first message is used to trigger the target terminal device to initiate a random access procedure, the first message further includes a first indication, and the first indication indicates the target terminal device to send the data in the target terminal device. Then, the core network element may receive a registration request sent by the target terminal device based on the first indication, where the registration request includes the data in the target terminal device.

According to the method, when the storage area of the target terminal device is a single storage area, the core network element may send the first indication to the target terminal device, and after receiving the first indication, the target terminal device may send the data in the target terminal device to the core network element by using the registration request, so that the core network element does not need to send a read command to the target terminal device. This can simplify a procedure of obtaining data from a terminal device having a single storage area, and reduce overheads.

According to a fourth aspect, an embodiment of this application provides a communication method. The method may be performed by a terminal device, or may be performed by a component used in a terminal device, for example, a chip or a processor. An example in which the method is performed by a target terminal device is used below for description. The target terminal device may receive a first message sent by a core network element through an access network device, where the first message is used to trigger the target terminal device to initiate a random access procedure, the first message further includes a first indication, and the first indication indicates the target terminal device to send data in the target terminal device. Then, the target terminal device may send a registration request to the core network element based on the first indication, where the registration request includes the data in the target terminal device.

According to the method, when the storage area of the target terminal device is a single storage area, the core network element may send the first indication to the target terminal device, and after receiving the first indication, the target terminal device may send the data in the target terminal device to the core network element by using the registration request, so that the core network element does not need to send a read command to the target terminal device. This can simplify a procedure of obtaining data from a terminal device having a single storage area, and reduce overheads.

According to a fifth aspect, an embodiment of this application provides a communication apparatus, including a unit configured to perform the steps in any one of the foregoing aspects.

According to a sixth aspect, an embodiment of this application provides a communication apparatus, including at least one processing element and at least one storage element. The at least one storage element is configured to store a program and data, and the at least one processing element is configured to read and execute the program and the data that are stored in the storage element, so that the method according to any one of the foregoing aspects of this application is implemented.

According to a seventh aspect, an embodiment of this application provides a communication system, including a core network device configured to perform the method according to the first aspect and a terminal device configured to perform the method according to the second aspect.

According to an eighth aspect, an embodiment of this application provides a communication system, including a core network device configured to perform the method according to the third aspect and a terminal device configured to perform the method according to the fourth aspect.

According to a ninth aspect, an embodiment of this application further provides a computer program. When the computer program is run on a computer, the computer is enabled to perform the method according to any one of the foregoing aspects.

According to a tenth aspect, an embodiment of this application further provides a computer-readable storage medium. The computer-readable storage medium stores a computer program. When the computer program is executed by a computer, the computer is enabled to perform the method according to any one of the foregoing aspects.

According to an eleventh aspect, an embodiment of this application further provides a chip. The chip is configured to read a computer program stored in a memory, to perform the method according to any one of the foregoing aspects.

According to a twelfth aspect, an embodiment of this application further provides a chip system. The chip system includes a processor, configured to support a computer apparatus in implementing the method according to any one of the foregoing aspects. **In** a possible design, the chip system further includes a memory, and the memory is configured to store a program and data that are necessary for the computer apparatus. The chip system may include a chip, or may include a chip and another discrete component.

For technical effects that can be achieved in any one of the fifth aspect to the twelfth aspect, refer to the descriptions of the technical effects that can be achieved in any possible design in any one of the first aspect to the fourth aspect. Repeated parts are not described.

### BRIEF DESCRIPTION OF DRAWINGS

FIG. 1 is a diagram of a tag structure according to an embodiment of this application;
FIG. 2 is a diagram of an architecture of a communication system according to an embodiment of this application;
FIG. 3 is a diagram of an architecture of another communication system according to an embodiment of this application;
FIG. 4 is a flowchart of a first communication method according to an embodiment of this application;
FIG. 5 is a flowchart of a second communication method according to an embodiment of this application;
FIG. 6 is a flowchart of a third communication method according to an embodiment of this application;
FIG. 7 is a flowchart of a fourth communication method according to an embodiment of this application;
FIG. 8 is a flowchart of a fifth communication method according to an embodiment of this application;
FIG. 9 is a flowchart of a sixth communication method according to an embodiment of this application;
FIG. 10 is a flowchart of a seventh communication method according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

This application provides a communication method and apparatus, to improve efficiency of operating an internet of things terminal device. The method and the apparatus are based on a same technical concept. Because problem-resolving principles of the method and the apparatus are similar, mutual reference may be made to implementations of the method and the apparatus, and repeated descriptions are not described again.

The following describes some terms in this application, to facilitate understanding of a person skilled in the art.

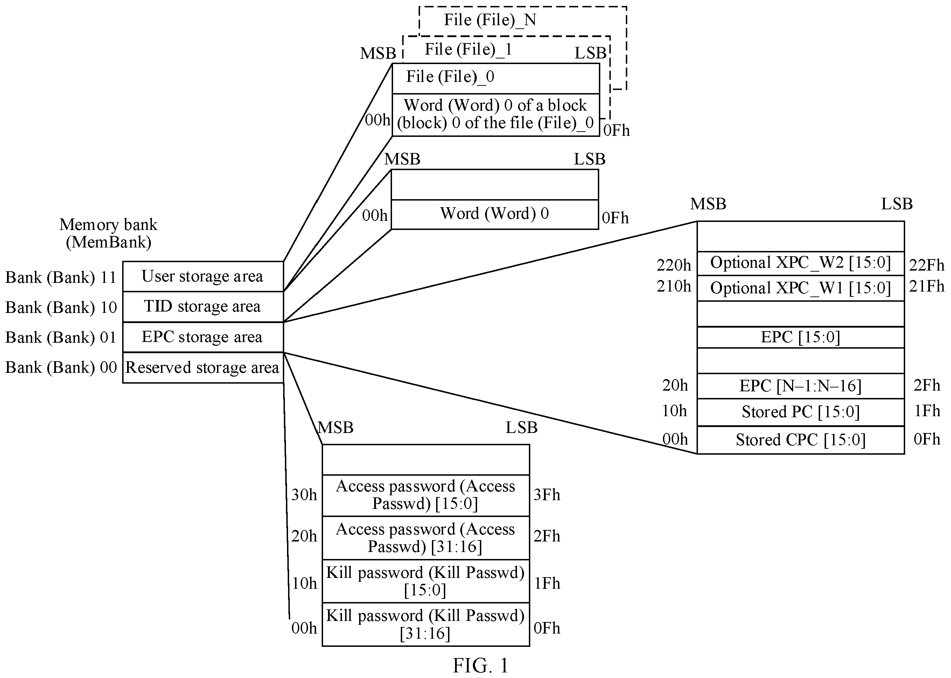

(1) FIG. 1 is a diagram of a format of a storage area of a tag in the conventional technology. As shown in FIG. 1, the storage area includes: a reserved (reserved) storage area, an (electronic product code, EPC) storage area, a tag identifier (tag identifier, TID) storage area, and a user (user) storage area. The following describes each storage area.
   (a) Reserved storage area: The reserved storage area is used to store a password required for a kill (kill) command function and/or an access (access) command function.
   (b) EPC storage area: The EPC storage area is used to store information associated with an EPC. The information associated with the EPC may include at least one of the following: a stored cyclic redundancy code (cyclic redundancy code, CRC) (Stored CRC) of the tag, a stored product code (product code, PC) (Stored PC) of the tag, the EPC of the tag, and an extended product code (extended product code, XPC) of the tag.
   (c) Tag identifier (tag identifier, TID) storage area: The tag identifier storage area may be used to store the tag and data of a provider, for example, may be used to store an identifier of a tag manufacturer and/or a tag type identifier.
   (d) User (user) storage area: The user storage area is an optional extended area for storing user-specific data.

FIG. 1 is only an example of the format of the storage area of the tag. The tag may include more or fewer storage areas. A memory bank (MemBank) corresponding to each storage area in the tag may be indicated by using a binary or decimal identifier.

When the memory bank is indicated by using the binary identifier, a length of the binary identifier may be determined based on a quantity of storage areas in the tag. For example, there are four storage areas in the tag shown in FIG. 1, and a memory bank corresponding to each storage area may be indicated by using a 2-bit binary identifier. For example, the reserved storage area corresponds to a bank 00 in the memory bank, the EPC storage area corresponds to a bank 01 in the memory bank, the TID storage area corresponds to a bank 10 in the memory bank, and the user storage area corresponds to a bank 11 in the memory bank.

For another example, when the memory bank is indicated by using the decimal identifier, the reserved storage area corresponds to a bank 0 in the memory bank, the EPC storage area corresponds to a bank 1 in the memory bank, the TID storage area corresponds to a bank 2 in the memory bank, and the user storage area corresponds to a bank 3 in the memory bank.

In this application, an example in which a tag includes four storage areas and a memory bank is indicated by using a binary identifier is used for description.

(2) Inventory operation: The inventory operation may also be referred to as a stocktaking operation. The operation may obtain an EPC of a terminal device, for example, obtain an EPC of the terminal by using a command such as a query (query) or an acknowledgment (ack) command. When an inventory operation needs to be performed on a plurality of terminal devices, a core network device may obtain EPCs of the plurality of terminal devices one by one or in batches through an access network device.

(3) Read (Read) operation: The read operation may read an EPC or a tag identifier (tag identifier, TID) in a storage area of the terminal device, content stored in a reserved storage area, content stored in a user storage area, or the like.

(4) Write (Write) operation: The write operation may be performing a write operation on a storage area of the terminal device. For example, identification information (for example, the EPC or the TID) in the storage area may be written or rewritten; or data in the reserved storage area or the user storage area may be written or rewritten.

(5) Kill (Kill) operation: The kill operation may invalidate the terminal device. For example, the invalidated terminal device cannot work.

(6) Lock (Lock) operation: The lock operation may lock information about the terminal device, to prevent a read operation or a write operation from being performed on the terminal device. Alternatively, the lock operation may lock a storage area (memory banks), to prevent or allow a read operation or a write operation on the storage area.

(7) Block write operation: A reader/writer may perform a multi-word write operation on the storage area (for example, the reserved storage area, the EPC storage area, the TID storage area, or the user storage area) of the terminal device by using a single command.

(8) Block erase operation: The reader/writer may perform a multi-word erase operation on the storage area (for example, the reserved storage area, the EPC storage area, the TID storage area, or the user storage area) of the terminal device.

(9) Access operation: A terminal device with a non-zero access password (access password) changes from an open (open) state to a secured (secured) state.

In embodiments of this application, unless otherwise specified, a noun quantity indicates "a singular noun or a plural noun", namely, "one or more". In addition, "at least one" means one or more, and "a plurality of" means two or more. A term "and/or" describes an association relationship between associated objects and represents that three relationships may exist. For example, A and/or B may represent the following three cases: Only A exists, both A and B exist, and only B exists. In addition, "at least one of the following items (pieces)" or a similar expression thereof means any combination of these items (pieces), including any combination of singular items (pieces) or plural items (pieces).

In addition, it should be understood that, in the descriptions of this application, terms such as "first" and "second" are merely used for distinguishing and description, but should not be understood as an indication or implication of relative importance, or should not be understood as an indication or implication of a sequence.

The following describes embodiments of this application in detail with reference to the accompanying drawings.

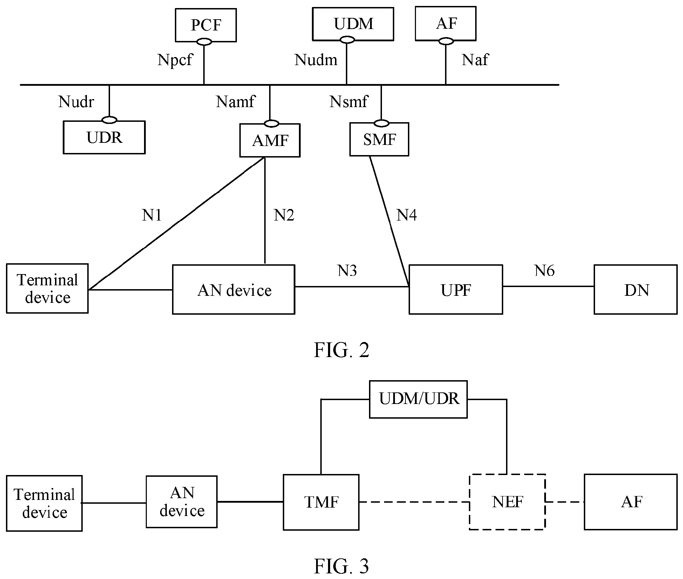

FIG. 2 is a diagram of an architecture of a communication system according to an embodiment of this application, and shows a 5th generation (5th generation, 5G) network architecture based on a service-oriented architecture. The 5G network architecture shown in FIG. 2 may include a terminal device, an access network (access network, AN) device, and a core network (core network, CN) device. The terminal device accesses a data network (data network, DN) through the access network device and the core network device. The following describes the components of the communication system.

In this application, the terminal device may also be referred to as a tag, user equipment (user equipment, UE), a terminal, an access terminal, a subscriber unit, a subscriber station, a mobile station, a mobile console, a remote station, a remote terminal, a mobile device, a user terminal, a wireless communication device, a user agent, a user apparatus, a target terminal, or the like. The terminal device in this application may be a passive (passive) terminal device such as a passive tag or a semi-passive tag. The passive tag includes but is not limited to a passive terminal tag such as RFID, Bluetooth, and Zigbee (Zigbee). The semi-passive tag may also be referred to as a sensor tag.

The terminal device may be widely used in various scenarios, for example, internet of things (internet of things, IOT), device-to-device (device-to-device, D2D), vehicle to everything (vehicle to everything, V2X) communication, machine-type communication (machine-type communication, MTC), virtual reality, augmented reality, industrial control, autonomous driving, telemedicine, smart grid, smart furniture, smart office, smart wearable, smart transportation, and smart city.

A terminal device in the intelligent wearable field may be referred to as a wearable device or a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. A generalized wearable device features in full functions and a large size, and can implement complete or partial functions without depending on a smartphone, for example, a smartwatch or smart glasses. The generalized wearable device may alternatively include a device that focuses on only one type of application function and needs to work with another device such as a smartphone, for example, various smart bands or smart jewelry for monitoring physical signs.

In this application, an apparatus configured to implement a function of a passive terminal device may be a terminal device, or may be an apparatus, for example, a chip system, that can support the terminal device in implementing the function, and the apparatus may be installed in the terminal device. In this application, the chip system may include a chip, or may include a chip and another discrete component. In the technical solutions provided in this application, an example in which the apparatus configured to implement a function of a tag is a terminal device is used to describe the technical solutions provided in embodiments of this application.

The access network device is a device that provides a wireless communication function for the terminal device. For example, the access network device includes but is not limited to a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission point (transmitting and receiving point, TRP), and a transmitting point (transmitting point, TP), a mobile switching center.

In some deployments, the gNB may include a central unit (central unit, CU) and a distributed unit (distributed unit, DU). The gNB may further include an active antenna unit (active antenna unit, AAU). The CU can implement some functions of the gNB, and the DU can implement other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the access network device may include one or more of a CU node, a DU node, or an AAU node. In addition, the CU may be classified as an access network device in an access network, or the CU may be classified as an access network device in a CN. This is not limited in this application.

The access network device and the terminal device may be at fixed locations, or may be movable. The access network device and the terminal device may be deployed on land, including indoor, outdoor, handheld, or vehicle-mounted, or may be deployed on water, or may be deployed on an airplane, a balloon, or an artificial satellite in the air. Application scenarios of the access network device and the terminal device are not limited in embodiments of this application.

The core network device includes some or all of the following network elements: a unified data management (unified data management, UDM) network element, a unified data repository (unified data repository, UDR) network element, a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a network repository function (network repository function, NRF) network element (not shown in the figure).

In this application, a mobility management network element is a control plane network element provided by an operator network, and is responsible for access control and mobility management when the terminal device accesses the operator network, for example, including functions such as mobility status management, temporary user identity assignment, and user authentication and authorization. In 5G, the mobility management network element may be the AMF network element. In future communication such as 6th generation (6th generation, 6G), the mobility management network element may still be the AMF network element, or may have another name. This is not limited in this application.

In this application, a session management network element is a control plane network element provided by the operator network, and is responsible for managing a protocol data unit (protocol data unit, PDU) session of the terminal device. The PDU session is a channel for PDU transmission, and the terminal device needs to perform PDU transmission with the DN through the PDU session. The SMF network element is responsible for establishment, maintenance, deletion, and the like of the PDU session. The session management network element includes session-related functions such as session management (for example, session establishment, modification, and release, including tunnel maintenance between a user plane network element and the access network device), selection and control of the user plane network element, service and session continuity (Service and Session Continuity, SSC) mode selection, and roaming. In 5G, the session management network element may be the SMF network element. In future communication such as 6G, the session management network element may still be the SMF network element, or may have another name. This is not limited in this application.

In this application, the user plane network element is a gateway provided by an operator, and is a gateway for communication between the operator network and the DN. The UPF network element includes user plane-related functions such as packet routing and transmission, packet detection, service usage reporting, quality of service (Quality of Service, QoS) processing, lawful interception, uplink packet detection, and downlink data packet storage. In 5G, the user plane network element may be the UPF network element. In future communication such as 6G, the user plane network element may still be the UPF network element, or may have another name. This is not limited in this application.

In this application, a data management network element is a control plane network element provided by the operator, and is responsible for storing information such as a subscription permanent identifier (subscription permanent identifier, SUPI), a credential (credential), a security context (security context), and subscription data of a subscriber in the operator network. The information stored in the data management network element may be used for authentication and authorization for accessing the operator network by the terminal device. The subscriber in the operator network may be specifically a user using a service provided by the operator network, for example, a user using a SIM card of China Telecom, or a user using a SIM card of China Mobile. The subscription permanent identifier (Subscription Permanent Identifier, SUPI) of the subscriber may be a number of the SIM card or the like. A credential and a security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the subscriber. The subscription data of the subscriber may be a supporting service of the SIM card, for example, a traffic package or a used network of the SIM card. It should be noted that the permanent identifier, the credential, the security context, the cookie (cookie), and the token are equivalent to information related to authentication and authorization, and are not distinguished or limited in this application document for ease of description. Unless otherwise specified, the security context is used as an example for description in embodiments of this application. However, embodiments of this application are also applicable to authentication and/or authorization information described in another manner. In 5G, the data management network element may be the UDM network element. In future communication such as 6G, the data management network element may still be the UDM network element, or may have another name. This is not limited in this application.

In this application, a unified data repository network element is a control plane network element provided by the operator, and includes a function of accessing data of a type such as subscription data, policy data, and application data. In 5G, the unified data repository network element may be the UDR network element. In future communication such as 6G, the unified data repository network element may still be the UDR network element, or may have another name. This is not limited in this application.

In this application, a network exposure network element is a control plane network element provided by the operator. The network exposure network element securely exposes an external interface of the operator network to a third party. When the session management network element needs to communicate with a third-party network element, the network exposure network element may serve as a relay for communication between the session management network element and the third-party network element. When serving as the relay, the network exposure network element may translate identification information of the subscriber and identification information of the third-party network element. For example, when sending the SUPI of the subscriber from the operator network to the third party, the network exposure network element may translate the SUPI into an external identity (identity, ID) corresponding to the SUPI. On the contrary, when sending an external ID (a network element ID of the third party) to the operator network, the network exposure network element may translate the external ID into the SUPI. In 5G, the network exposure network element may be the NEF network element. In future communication such as 6G, the network exposure network element may still be the NEF network element, or may have another name. This is not limited in this application.

In this application, an application function network element is configured to transfer a requirement of an application side for a network side, for example, a QoS requirement or a user status event subscription. The application function network element may be a third-party functional entity, or may be an application server deployed by the operator. In 5G, the application function network element may be the AF network element. In future communication such as 6G, the application function network element may still be the AF network element, or may have another name. This is not limited in this application.

In this application, a policy control network element is a control plane function provided by the operator, and is configured to provide a PDU session policy for the session management network element. The policy may include a charging-related policy, a QoS-related policy, an authorization-related policy, and the like. In 5G, the policy control network element may be the PCF network element. In future communication such as 6G, the policy control network element may still be the PCF network element, or may have another name. This is not limited in this application.

In this application, a network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication such as 6G, the network repository function network element may still be the NRF network element, or may have another name. This is not limited in this application.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 2, Npcf, Nudr, Nudm, Naf, Namf, and Nsmf are service-oriented interfaces provided by the PCF, UDR, UDM, AF, AMF and SMF respectively for invoking corresponding service-oriented operations. An N1 interface is an interface between the AMF and the terminal device, and may be configured to transfer NAS signaling (for example, including a QoS rule from the AMF) to the terminal device. An N2 interface is an interface between the AMF and the RAN, and is configured to transfer radio bearer control information from a core network side to the RAN. An N3 interface is an interface between the RAN and the UPF, and is mainly configured to transfer uplink/downlink user plane data between the RAN and the UPF. An N4 interface is an interface between the SMF and the UPF, and is configured to transfer information between a control plane and a user plane, including delivery of a forwarding rule, a QoS control rule, a traffic statistics rule, and the like from the control plane to the user plane, and reporting of user plane information. An N6 interface is an interface between the UPF and DN, and is configured to transfer uplink/downlink subscriber data flow between the UPF and the DN.

FIG. 3 is a diagram of an architecture of another communication system to which an embodiment of this application is applicable. As shown in FIG. 3, the communication system may include a terminal device, an AN device, a tag management function (TAG Management Function, TMF) network element, a UDM/UDR, an NEF, and an AF. For specific content of the terminal device, the AN device, the UDM/UDR, the NEF, and the AF, refer to the descriptions of FIG. 2. Repeated content is not described again.

The TMF can support a tag management function, and the function supports various tag management operations.

The TMF may directly communicate with the AF, or communicate with the AF through the NEF network element. After receiving an operation request from the AF, the TMF may perform an operation on a tag through the AN device.

The UDM/UDR may also directly communicate with the AF, or communicate with the AF through the NEF network element. After receiving a subscription request from the AF, the UDM/UDR may indicate the TMF to perform an EPC write operation on the tag through the AN device.

In addition, the TMF may serve as an independent network element, or may be co-located with another network element. For example, the TMF may be co-located with the NEF, or may be co-located with the UDM. This is not limited in this application. In addition, the TMF is only an example name. All devices that can implement functions corresponding to the TMF in this application may be understood as the TMF in this application.

A dashed box and a dashed line in FIG. 3 respectively represent an optional network element and an optional connection.

It may be understood that the foregoing network elements or functions may be network elements in a hardware device, or may be software functions that are run on dedicated hardware, or may be instantiated virtualization functions on a platform (for example, a cloud platform). In a possible implementation, the foregoing network elements or functions may be implemented by one device, or may be jointly implemented by a plurality of devices, or may be implemented by one functional module in one device. This is not specifically limited in embodiments of this application.

It should be noted that the communication system shown in FIG. 2 or FIG. 3 does not constitute a limitation on a communication system to which embodiments of this application are applicable. Therefore, a communication method provided in embodiments of this application may be further applicable to communication systems of various standards, for example, a long term evolution (long term evolution, LTE) communication system, a 5G communication system, a 6G communication system, a future communication system, vehicle to everything (vehicle to everything, V2X), a long term evolution-internet of vehicles (LTE-vehicle, LTE-V), vehicle to vehicle (vehicle to vehicle, V2V), an internet of vehicles, machine-type communication (Machine-Type Communication, MTC), IoT, a long term evolution-machine to machine (LTE-machine to machine, LTE-M), machine to machine (machine to machine, M2M), an internet of things, and the like. In addition, it should be further noted that names of the network elements in the communication system are not limited in embodiments of this application either. For example, in communication systems of different standards, the network elements may have other names. For another example, when a plurality of network elements are integrated into a same physical device, the physical device may have another name.

Currently, a card reader may be integrated into the access network device. The access network device may operate the terminal device according to an instruction of the core network element (for example, the TMF). As shown in FIG. 1, there may be a plurality of storage areas in the terminal device. Operations are usually related to the storage areas. For example, when an EPC write operation is performed, an EPC should be written into the EPC storage area, and when an operation of writing a password required for an access function is performed, the password required for the access function should be written into the reserved storage area. Currently, when the core network element instructs to perform an operation on the terminal device, a storage area corresponding to the operation in the terminal device is not considered. As a result, the terminal device does not know an area in which the operation should be performed, reducing efficiency of performing an operation on the terminal device.

The following describes the solutions provided in this application with reference to the accompanying drawings.

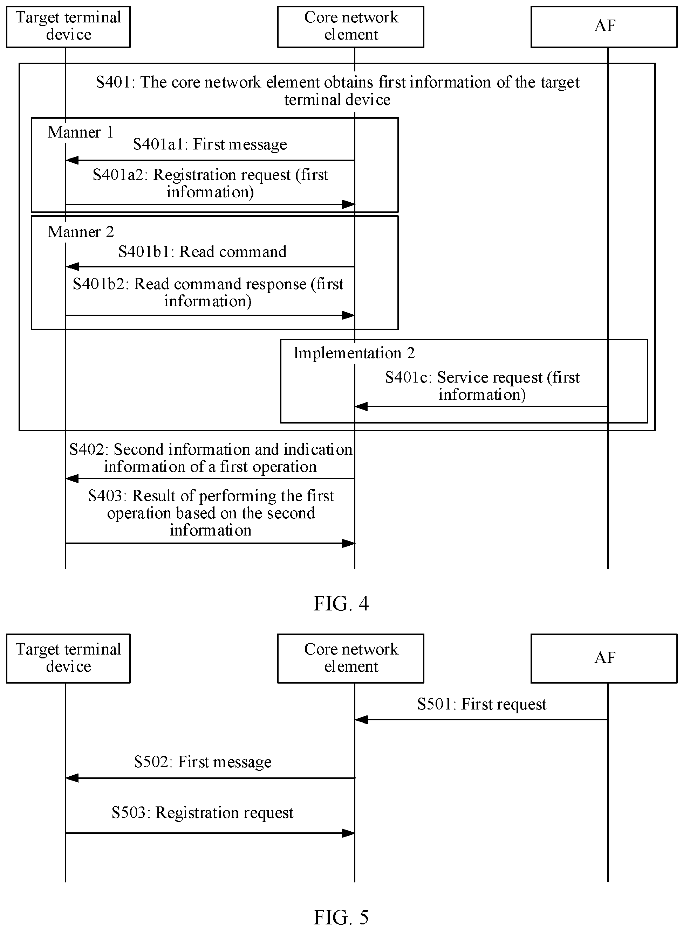

An embodiment of this application provides a communication method. The method may be applied to the communication system shown in FIG. 2 or FIG. 3. Refer to a flowchart shown in FIG. 4. The following specifically describes a procedure of the method by using an example in which an application function network element is an AF.

S401: A core network element obtains first information of a target terminal device, where the first information may be used to determine second information, and the second information indicates a storage area corresponding to a first operation in the target terminal device.

The core network element may be a TMF. The target terminal device may be a passive terminal device such as a passive tag or a semi-passive tag, for example, may correspond to the terminal device in FIG. 3.

Optionally, the first information may include at least one of the following:
1. TID of the target terminal device: The TID of the target terminal device may indicate a hardware type of the target terminal device. The hardware type of the target terminal device may be used to determine a type of the target terminal device.
2. Chip type information of the target terminal device: The chip type information of the target terminal device may indicate a chip type of the target terminal device. The chip type of the target terminal device may be used to determine a type of the target terminal device. For example, the chip type information of the target terminal device may be a chip type identifier of the target terminal device.
3. Factory mark information of the target terminal device: The factory mark information of the target terminal device may indicate factory information of the target terminal device. The factory information of the target terminal device may be used to determine a type of the target terminal device. For example, the factory mark information of the target terminal device may include at least one of the following: manufacturer information of the target terminal device, and production batch information of the target terminal device.
4. Storage area information of the target terminal device: The storage area information of the target terminal device may indicate a storage area of the target terminal device.

For example, when the target terminal device is the tag shown in FIG. 1, in the storage area information of the target terminal device, an identifier of the reserved storage area is 0 (corresponding to the bank 00 in the memory bank), an identifier of the EPC storage area is 1 (corresponding to the bank 01 in the memory bank), an identifier of the TID storage area is 2 (corresponding to the bank 10 in the memory bank), and an identifier of the user storage area is 3 (corresponding to the bank 11 in the memory bank).

In addition, the storage area information of the target terminal device may further include at least one of the following:
(1) Location at which data starts to be stored in each storage area: For example, in the EPC storage area, data starts to be stored from the 11^{th} bit. In this case, the storage area information of the target terminal device includes that a pointer value (for example, a start pointer value) of the EPC storage area is 11.
(2) Size of each storage area: For example, if a size of the EPC storage area is 96 bits, the storage area information of the target terminal device includes that the size of the EPC storage area is 96 bits.
(3) Function of each storage area: For example, if the reserved storage area is used to store a password and temperature data detected by the terminal device, the storage area information of the target terminal device includes that the reserved storage area is used to store the password and the temperature data detected by the terminal device.

5. Second information: Refer to the following descriptions of the second information.

Optionally, in S401, the second information may include an identifier of the storage area (referred to as a first storage area below) corresponding to the first operation in the target terminal device. When the second information includes the identifier of the first storage area, it may indicate that the first operation is performed in the entire first storage area. For example, when the target terminal device is the tag shown in FIG. 1, if the second information includes an identifier 3, it indicates that the first operation is performed in the entire user storage area.

In addition, the second information may further include at least one of the following:
1. Pointer value: The pointer value indicates a location at which the first operation starts to be performed in the first storage area. For example, if the first storage area is the user storage area, the first operation is a read operation, and the pointer value is 11, it indicates that data starts to be read from the 11^{th} bit of the user storage area.
2. Length: The length indicates a length of data on which the first operation is performed in the first storage area. For example, if the first storage area is the user storage area, the first operation is a read operation, and the length is 20 bits, it indicates that 20-bit data in the user storage area is read.
3. Mask or wildcard mask: The mask or the wildcard mask indicates a mask or a wildcard mask used to perform the first operation in the first storage area.

For example, the first operation may include but is not limited to one of the following: a read operation, a write operation, an access operation, a kill operation, a lock operation, a block write operation, a block erase operation, and an EPC write operation.

Optionally, the core network element may obtain the first information of the target terminal device in one of the following implementations.

Implementation 1: The core network element obtains the first information from the target terminal device. In other words, the target terminal device sends the first information to the core network element, and correspondingly the core network element receives the first information from the target terminal device.

In the implementation 1, the first information may include at least one of the following: the TID of the target terminal device, the chip type information of the target terminal device, the factory mark information of the target terminal device, and the storage area information of the target terminal device.

The first information may be carried in an existing message (for example, a registration request or a read command response), or may be carried in a new message.

In the implementation 1, the core network element may obtain the first information from the target terminal device in one of the following manners.

### Manner 1:

In the manner 1, S401 may include steps S401a1 and S401a2.

S401a1: The core network element sends a first message to the target terminal device through an AN device, where the first message is used to trigger the target terminal device to initiate a random access procedure.

The first message may be an existing message, or may be a new message. When the first message is an existing message, the first message may include an inventory command sent by the core network element to the AN device and a tag selection message sent by the AN device to the target terminal device. For example, after the core network element determines to perform a read operation or a write operation on the target terminal device or determines to perform an inventory operation on the target terminal device, the core network element may send the inventory command to the AN device, and then the AN device may send the tag selection message to the target terminal device.

Optionally, the first message includes a first specified identifier, and the first specified identifier may indicate the target terminal device to send the first information.

The first specified identifier may be an identifier that directly indicates the target terminal device to send the first information. In this way, after receiving the first specified identifier, the terminal device may send the first information to the core network element.

The first specified identifier may alternatively be an identifier that indirectly indicates the terminal device to send the first information. For example, the first specified identifier indicates that an inventory mode is a manner of reading EPCs of terminal devices one by one. In this way, after receiving the first specified identifier, the terminal device may determine that the inventory mode is a manner of reading EPCs of terminal devices one by one, and determine, based on the inventory mode, that the first information needs to be sent to the core network element.

S401a2: The target terminal device sends a registration request to the core network element, where the registration request includes the first information.

The target terminal device may initiate the random access procedure based on the first message, and send the registration request to the core network element through the AN device after accessing the AN device.

The random access procedure may include: The target terminal device receives a first query request from the AN device, where the first query request includes a first random number. The target terminal device sets a second random number based on the first random number, and if the specified second random number is 0, the target terminal device sends a third random number to the access network device. If the AN device can correctly receive the third random number, the AN device sends the third random number to the target terminal device. When the target terminal device receives the third random number, the target terminal device determines that random access succeeds.

Optionally, when the first message includes the first specified identifier, the target terminal device sends the registration request including the first information to the core network element.

In the manner 1, when the first operation needs to be performed on the target terminal device, the core network element may receive the registration request from the target terminal device, where the registration request includes the first information. In this way, the core network element can obtain the first information from the target terminal device as early as possible.

### Manner 2:

In the manner 2, S401 may include steps S401b1 and S401b2.

S401b1: The core network element sends a read command to the target terminal device, where the read command is used to read the first information in the target terminal device.

Optionally, before step S401b1, the core network element may send a first message to the target terminal device through an AN device, where the first message is used to trigger the target terminal device to initiate a random access procedure. The target terminal device may initiate the random access procedure based on the first message, and access the AN device. For specific content of sending the first message by the core network element to the target terminal device through the AN device, refer to step S401a1. For specific content of the random access procedure, refer to step S401a1. Details are not described herein again.

Optionally, after determining that the target terminal device is a passive tag or a semi-passive tag, the core network element may send the read command to the target terminal device. The core network element may obtain tag type indication information of the target terminal device from a first network element or the target terminal device, and determine, based on the tag type indication information, that the target terminal device is a passive tag or a semi-passive tag. The first network element may be an AF, a UDM, a UDR, a server, or the like. For example, the core network element may receive a read request from the AF, where the read request includes the tag type indication information of the target terminal device, and the tag type indication information indicates that the target terminal device is a passive tag or a semi-passive tag. For another example, the core network element may receive an EPC write request from the UDM, where the EPC write request includes the tag type indication information of the target terminal device, and the tag type indication information indicates that the target terminal device is a passive tag or a semi-passive tag. For another example, the core network element may receive a registration request from the target terminal device, where the registration request includes the tag type indication information of the target terminal device, and the tag type indication information indicates that the target terminal device is a passive tag or a semi-passive tag.

S401b2: The target terminal device sends a read command response to the core network element, where the read command response includes the first information.

In the manner 2, when the first operation needs to be performed on the target terminal device, the core network element may trigger, by using the read command, the target terminal device to send the read command response to the core network element, where the read command response includes the first information. In this way, the core network element may obtain the first information from the target terminal device as required.

Implementation 2: The core network element obtains the first information from the AF. In other words, the AF sends the first information to the core network element, and correspondingly the core network element receives the first information from the AF.

In the implementation 2, S401 may include step S401c: The AF sends a service request to the core network element, where the service request includes the first information.

The service request may be an operation request, and the operation request may be further used to request to perform the first operation on the target terminal device. For example, the operation request is a read request or a write request, and is used to request to perform a read operation or a write operation on the target terminal device.

Optionally, after S401c, the core network element may send a first message to the target terminal device through an AN device, where the first message is used to trigger the target terminal device to initiate a random access procedure. The target terminal device may initiate the random access procedure based on the first message, and access the AN device. For specific content of sending the first message by the core network element to the target terminal device through the AN device, refer to step S401a1. For specific content of the random access procedure, refer to step S401a1. Details are not described herein again.

In the implementation 2, when the first operation needs to be performed on the target terminal device, the AF may add the first information to the service request. In this way, the core network element can obtain the first information as early as possible.

After obtaining the first information, the core network element may obtain the second information based on the first information. Details are described below.

Optionally, when the first information includes one or more of the TID of the target terminal device, the chip type information of the target terminal device, and the factory mark information of the target terminal device, the core network element may obtain the second information in one of the following implementations:
Implementation 1: The core network element may determine the second information based on the first information.

The core network element may determine the second information by performing step A1 and step A2.

A1: The core network element obtains a correspondence (referred to as a first correspondence below) between the first information and the storage area corresponding to the first operation in the target terminal device.

The first correspondence may include a correspondence between at least one terminal device type, storage area information of a terminal device, and at least one operation. The terminal device type corresponds to one or more of a TID of a terminal device, chip type information of the terminal device, and factory mark information of the terminal device.

Storage areas of different types of terminal devices may be different. For example, for a terminal device of a type 1, a reserved storage area has an identifier 0 (corresponding to the bank 00 in the memory bank) and a size of 96 bits, and may be used to store a password and temperature data detected by the terminal device; an EPC storage area has an identifier 1 (corresponding to the bank 01 in the memory bank) and a size of 96 bits, and may be used to store an EPC; a TID storage area has an identifier 2 (corresponding to the bank 10 in the memory bank) and a size of 96 bits, and may be used to store a TID; and a user storage area has an identifier 3 (corresponding to the bank 11 in the memory database) and a size of 96 bits, and may be used to store humidity data detected by the terminal device. For a terminal device of a type 2, an EPC storage area has an identifier 0 (corresponding to the bank 00 in the memory bank) and a size of 128 bits, and may be used to store an EPC and detected temperature data; a TID storage area has an identifier 1 (corresponding to the bank 01 in the memory bank) and a size of 128 bits, and may be used to store a TID; a reserved storage area has an identifier 2 (corresponding to the bank 10 in the memory bank) and a size of 96 bits, and may be used to store a password; and a user storage area has an identifier 3 (corresponding to the bank 11 in the memory database) and a size of 128 bits, and may be used to store humidity data detected by the terminal device. Table 1 shows a possible implementation of the first correspondence.

**Table 1**

| Terminal device type | Storage area information of a terminal device | Operation |
|---|---|---|
| Type 1 | Reserved storage area: identifier 0 | Write operation (for example, password write operation) |
| | Used to store a password and temperature data detected by the terminal device | |
| | | Read operation (for example, temperature data read operation or password read operation) |
| | EPC storage area: identifier 1 | EPC write operation |
| | Used to store an EPC | Inventory operation |
| | TID storage area: identifier 2 | Read operation (for example, TID read operation) |
| | Used to store a TID | |
| | User storage area: identifier 3 | Read operation (for example, humidity data read operation) |
| | Used to store humidity data detected by the terminal device | |
| Type 2 | EPC storage area: identifier 0 | EPC write operation |
| | Used to store an EPC and detected temperature data | Inventory operation |
| | | Read operation (for example, temperature data read operation) |
| | TID storage area: identifier 1 | Read operation (for example, TID read operation) |
| | Used to store a TID | |
| | Reserved storage area: identifier 2 | Write operation (for example, password write operation) |
| | Used to store a password | |
| | | Read operation (for example, password read operation) |
| | User storage area: identifier 3 | Read operation (for example, humidity data read operation) |
| | Used to store humidity data detected by the terminal device | |

Table 1 is only an example of the first correspondence. The first correspondence may alternatively be represented in another form. For example, in the first correspondence, the storage area information of the terminal device may include at least one of the following: an identifier of each storage area, a location at which data starts to be stored in each storage area, a size of each storage area, a function of each storage area, and the like. The at least one operation is an operation supported by each storage area. For specific content of the storage area information of the terminal device, reference may be made to the foregoing descriptions of "storage area information of the target terminal device", and only the target terminal device is replaced with the terminal device. Details are not described herein again. The operation supported by each storage area may be information explicitly indicated, or may be information implicitly indicated by using a function of each storage area. For example, the EPC storage area is used to store the EPC and the detected temperature data, and operations supported by the EPC storage area may include the EPC write operation, the inventory operation, and the temperature data read operation.

Optionally, the first correspondence alternatively includes a correspondence between at least one of the following items and the storage area information of the terminal device and the at least one operation: the TID of the terminal device, the chip type information of the terminal device, and the factory mark information of the target terminal device. For example, the type in Table 1 may be replaced with one or more of the TID of the terminal device, the chip type information of the terminal device, and the factory mark information of the target terminal device.

In step A1, the core network element may obtain the first correspondence in one of the following manners:
Manner 1: The core network element obtains the first correspondence from a second network element.

The second network element may be a UDM, a UDR, an AF, a server, or the like.

For example, when the second network element is the UDM, the core network element may send a second query request to the UDM, where the second query request is used to request to obtain the first correspondence; and then the UDM may send a second query response to the core network element, where the second query response includes the first correspondence.

Optionally, after obtaining the first correspondence, the core network element may store the first correspondence.

Manner 2: The core network element obtains the locally stored first correspondence.

The first correspondence may be pre-stored in the core network element, or may be locally stored after being obtained from the second network element in the manner 1 when another terminal device is operated.

In addition, during actual use, the core network element may first determine whether the first correspondence is locally stored. If the core network element locally stores the first correspondence, the core network element may obtain the first correspondence in the manner 2. If the core network element does not locally store the first correspondence, the core network element may obtain the first correspondence in the manner 1.

A2: The core network element determines the second information based on the first correspondence and the first information.

For example, the first information includes TID1, a type of a terminal device corresponding to TID1 is a type 1, the first correspondence is the correspondence shown in Table 1, and the first operation is an EPC write operation. In this case, the core network element may determine that an identifier in the second information is 1 and indicates an EPC storage area in the terminal device of the type 1.

For another example, the first information includes TID2, a type of a terminal device corresponding to TID2 is a type 2, the first correspondence is the correspondence shown in Table 1, and the first operation is a temperature data read operation. In this case, the core network element may determine that an identifier in the second information is 0 and indicates an EPC storage area in the terminal device of the type 2.

For another example, the first information includes TID1, a type of a terminal device corresponding to TID1 is a type 1, and the first operation is a temperature data read operation. The first correspondence includes the correspondence shown in Table 1, and the storage area information of the terminal device further includes a location at which data starts to be stored in each storage area. If the storage area information of the terminal device indicates that data starts to be stored from the 15^{th} bit in the reserved storage area, the core network element may determine that in the second information, the identifier is 0 and indicates a reserved storage area in the terminal device of the type 1, and a pointer value is 15 and indicates that data starts to be read from the 15^{th} bit.

For another example, the first information includes TID2, a type of a terminal device corresponding to TID2 is a type 2, the first correspondence is the correspondence shown in Table 1, and the first operation is a temperature data read operation. If the core network element determines that a local temperature range is 0 degrees to 40 degrees, it may be determined that a length of the temperature data that needs to be read is 6 bits. In this case, the core network element may determine that in the second information, an identifier is 0 and indicates an EPC storage area in the terminal device of the type 2, and a length is 6 bits.

For still another example, the first information includes TID1, a type of a terminal device corresponding to TID1 is a type 1, and the first operation is a temperature data read operation. The first correspondence includes the correspondence shown in Table 1, and the storage area information of the terminal device further includes a location at which data starts to be stored in each storage area. The storage area information of the terminal device indicates that data starts to be stored from the 15^{th} bit in the reserved storage area. The core network element determines that a local temperature range is 0 degrees to 40 degrees, and therefore a length of the temperature data that needs to be read is 6 bits. In this case, the core network element may determine that in the second information, an identifier is 0 and indicates a reserved storage area in the terminal device of the type 1; and a length of a mask is 96 bits, where the first 14 bits of the mask are all 0, the 15^{th} bit to the 20^{th} bit of the mask are all 1, and the 21^{st} bit of the mask is 0, indicating to read data in the 15^{th} bit to the 20^{th} bit in the reserved storage area. Alternatively, the core network element may determine that in the second information, an identifier is 0 and indicates a reserved storage area in the terminal device of the type 1; and a length of a wildcard mask is 96 bits, where the first 14 bits of the wildcard mask are all 1, the 15^{th} bit to the 20^{th} bit of the wildcard mask are all 0, and the 21^{st} bit of the wildcard mask is 1, indicating to read data in the 15^{th} bit to the 20^{th} bit in the reserved storage area.

In the implementation 1, the core network element may determine the second information based on the first information and the first correspondence, and does not need to obtain the second information from another device. This can simplify a procedure of obtaining the second information, and improve efficiency of obtaining the second information.

Implementation 2: The core network element obtains, from a third network element, the second information determined by the third network element based on the first information.

The third network element may be a UDM, a UDR, an AF, a server, or the like.

In the implementation 2, the core network element may obtain the second information by performing steps B1 to B3.

B1: The core network element sends the first information to the third network element.

The first information may be carried in an existing message (for example, a query response), or may be carried in a new message. For example, when the third network element is the UDM, the core network element may send a third query request to the UDM, where the third query request includes the first information. The third query request is used to request to obtain the second information.

Optionally, when the third network element is the UDM, the UDR, or the server, the core network element may further send indication information of the first operation to the third network element. For example, the third query request sent by the core network element to the UDM further includes the indication information of the first operation.

The indication information of the first operation may be indication information having a correspondence with the first operation, for example, an identifier of the first operation. For example, the read operation corresponds to an operation identifier 1, and the write operation corresponds to an operation identifier 2.

B2: The third network element determines the second information based on the first information.

For a specific process in which the third network element determines the second information, reference may be made to steps A1 and A2, and only the core network element is replaced with the third network element. Details are not described herein again.

B3: The third network element sends the second information to the core network element. Correspondingly, the core network element receives the second information from the third network element.

The second information may be carried in an existing message (for example, a query response), or may be carried in a new message. For example, when the third network element is the UDM, the UDM may send a third query response to the core network element, where the third query response includes the second information.

Optionally, after receiving the second information, the core network element may store a correspondence between the second information and the target terminal device. For example, the core network element stores a correspondence between the EPC of the target terminal device, the storage area corresponding to the first operation, and the pointer value.

Optionally, when the first information includes the storage area information of the target terminal device, the core network element may determine the second information based on the storage area information of the target terminal device and the indication information of the first operation.

For example, when the target terminal device is the terminal device of the type 1 or the type 2 in step A1, the correspondence between the storage area information and the operation of the target terminal device may meet the correspondence shown in Table 1. For a manner in which the core network element determines the second information based on the storage area information of the target terminal device and the indication information of the first operation, refer to the descriptions of the implementation 1. Details are not described herein again.

The core network element may obtain the indication information of the first operation based on the service request from the AF. For example, the core network element receives a read request from the AF, where the read request includes indication information of a read operation, and indicates to perform the read operation on the target terminal device. For another example, the core network element receives a read request from the AF, where the read request is indication information of a read operation. For another example, the core network element receives a write request from the AF, where the write request includes indication information of a write operation, and indicates to perform the write operation on the target terminal device. For another example, the core network element receives a write request from the AF, where the write request is indication information of a write operation.

When the core network element obtains the first information from the target terminal device, a sequence in which the core network element obtains the first information and the indication information of the first operation is not limited in this application, provided that the first information and the indication information of the first operation are obtained before S402. When the core network element obtains the first information from the AF, the AF may send the first information and the indication information of the first operation to the core network element by using one message (for example, the service request), or may send the first information and the indication information of the first operation to the core network element by using two messages respectively.

S402: The core network element sends the second information and the indication information of the first operation to the target terminal device. Correspondingly, the target terminal device receives the second information and the indication information of the first operation from the core network element.

The core network element may send the second information and the indication information of the first operation to the target terminal device by using one message. Alternatively, the core network element may send the second information and the indication information of the first operation to the target terminal device by using two messages respectively.

For example, the core network element may send an operation message to the target terminal device, where the operation message includes the second information and the indication information of the first operation. For example, the core network element sends a read operation message to the target terminal device, where the read operation message includes the second information and the indication information of the first operation.

In addition, the operation message may also be the indication information of the first operation. In this case, in S402, the core network element may send an operation message to the target terminal device, where the operation message includes the second information. For example, the core network element sends a write operation message to the target terminal device, where the write operation message includes the second information, and the write operation message is the indication information of the write operation.

S403: The target terminal device sends, to the core network element, a result of performing the first operation by the target terminal device based on the second information. Correspondingly, the core network element receives the result of performing the first operation by the target terminal device based on the second information.

For example, if the target terminal device is the terminal device of the type 1, for specific content of the storage area of the terminal device of the type 1, reference may be made to step A1. The first operation is an EPC write operation, and in the second information, the identifier is 1. The target terminal device may determine that the storage area corresponding to the identifier 1 is the EPC storage area, and corresponds to the bank 01 in the memory bank. The target terminal device may write an EPC into the bank 01 in the memory bank. After writing the EPC, the target terminal device may send, to the core network element, information indicating that the EPC write operation is completed on the target terminal device.

For another example, the target terminal device is the terminal device of the type 1. The first operation is a temperature data read operation. In the second information, the identifier is 0, and the pointer value is 15. The target terminal device may determine that the storage area corresponding to the identifier 0 is the reserved storage area, and corresponds to the bank 00 in the memory bank. The target terminal device may start to read temperature data from the 15^{th} bit in the bank 00 in the memory bank. After reading the temperature data, the target terminal device may send the read temperature data to the core network element.

For another example, if the target terminal device is the terminal device of the type 2, for specific content of the storage area of the terminal device of the type 2, reference may be made to step A1. In the second information, the identifier is 0, the pointer is 15, and the length is 6 bits. The target terminal device may determine that the storage area corresponding to the identifier 0 is the EPC storage area, and corresponds to the bank 00 in the memory bank. The target terminal device may start to read 6 bits of temperature data from the 15^{th} bit in the bank 00 in the memory bank. After reading the temperature data, the target terminal device may send the read temperature data to the core network element.

For still another example, the target terminal device is the terminal device of the type 1. The first operation is a temperature data read operation. In the second information, the identifier is 0, and the length of the mask is 96 bits, where the first 14 bits of the mask are all 0, the 15^{th} bit to the 20^{th} bit of the mask are all 1, and the 21^{st} bit of the mask is 0. The target terminal device may determine that the storage area corresponding to the identifier 0 is the reserved storage area, and corresponds to the bank 00 in the memory bank. The target terminal device may determine to read the 15^{th} bit to the 20^{th} bit in the bank 00 in the memory bank based on the mask, to obtain temperature data in the 15^{th} bit to the 20^{th} bit. After reading the temperature data, the target terminal device may send the read temperature data to the core network element.

For still another example, the target terminal device is the terminal device of the type 1. The first operation is a temperature data read operation. In the second information, the identifier is 0, and the length of the wildcard mask is 96 bits, where the first 14 bits of the wildcard mask are all 1, the 15^{th} bit to the 20^{th} bit of the wildcard mask are all 0, and the 21^{st} bit of the wildcard mask is 1. The target terminal device may determine that the storage area corresponding to the identifier 0 is the reserved storage area, and corresponds to the bank 00 in the memory bank. The target terminal device may determine to read the 15^{th} bit to the 20^{th} bit in the bank 00 in the memory bank based on the wildcard mask in the second information, to obtain temperature data in the 15^{th} bit to the 20^{th} bit. After reading the temperature data, the target terminal device may send the read temperature data to the core network element.

According to the method shown in FIG. 4, the core network element may obtain the first information, and obtain, based on the first information, the second information indicating the storage area corresponding to the first operation in the target terminal device. When instructing to operate the target terminal device, the core network element sends the second information and the indication information of the first operation to the target terminal device, so that the terminal device can determine the storage area corresponding to the first operation, thereby improving efficiency of operating the terminal device.

An embodiment of this application provides another communication method. The method may be applied to the communication system shown in FIG. 2 or FIG. 3. Refer to a flowchart shown in FIG. 5. The following specifically describes a procedure of the method by using an example in which an application function network element is an AF.

S501: The AF sends a first request to a core network element. Correspondingly, the core network element receives the first request from the AF.

The core network element may be a TMF.

The first request is used to request to read data in a target terminal device. For example, the first request includes an EPC of the target terminal device, and indicates that the data in the target terminal device is requested to be read. For another example, the first request includes a first EPC range, and indicates that data belonging to the first EPC range in the terminal device is requested. The first EPC range includes the EPC of the target terminal device.

In addition, a storage area of the target terminal device is a single storage area. The first request may indicate, in one of the following manners, that the storage area of the target terminal device is a single storage area:
Manner A: The first request includes tag type indication information of the target terminal device, and the tag type indication information indicates that the storage area of the target terminal device is a single storage area. For example, a storage area of a terminal device of a type 3 is a single storage area. If the tag type indication information indicates the type 3, the tag type indication information indicates that the storage area of the target terminal device is a single storage area.
Manner B: The first request is a request dedicated to reading data in a terminal device having a single storage area. For example, when a message format of the first request is a specified format, the first request is a request dedicated to reading data in a terminal device having a single storage area. In this way, the core network element may determine, by parsing the format of the first request, that the first request is a request for reading data in a terminal device having a single storage area.

For example, the first request is a read request.

S502: The core network element sends a first message to the target terminal device through an AN device. Correspondingly, the target terminal device receives the first message.

The first message may be used to trigger the target terminal device to initiate a random access procedure.

The first message may be an existing message, or may be a new message. When the first message is an existing message, the first message may include an inventory command sent by the core network element to the AN device and a tag selection message sent by the AN device to the target terminal device.

In addition, the first message further includes a first indication. The first indication may indicate the target terminal device to send the data in the target terminal device. For example, the first indication may be the tag type indication information of the target terminal device, the tag type indication information indicates that the storage area of the target terminal device is a single storage area, and the tag type indication information indicates the target terminal device to send the data in the target terminal device. For another example, the first indication may be a second specified identifier, and the second specified identifier indicates the target terminal device to send the data in the target terminal device.

S503: The target terminal device sends a registration request to the core network element based on the first indication. Correspondingly, the core network element receives the registration request from the target terminal device.

The registration request includes the data in the target terminal device. The data in the target terminal device is data stored in the single storage area of the target terminal device.

In this application, when the first message received by the target terminal device includes the first indication, the target terminal device may send the registration request including the data in the target terminal device to the core network element.

Optionally, before sending the registration request to the core network element, the target terminal device may initiate the random access procedure based on the first message, and access the AN device. For specific content, refer to S401a2. Details are not described herein again.

According to the method shown in FIG. 5, when the storage area of the target terminal device is a single storage area, the core network element may send the first indication to the target terminal device, and after receiving the first indication, the target terminal device may send the data in the target terminal device to the core network element by using the registration request, so that the core network element does not need to send a read command to the target terminal device. This can simplify a procedure of obtaining data from a terminal device having a single storage area, and reduce overheads.

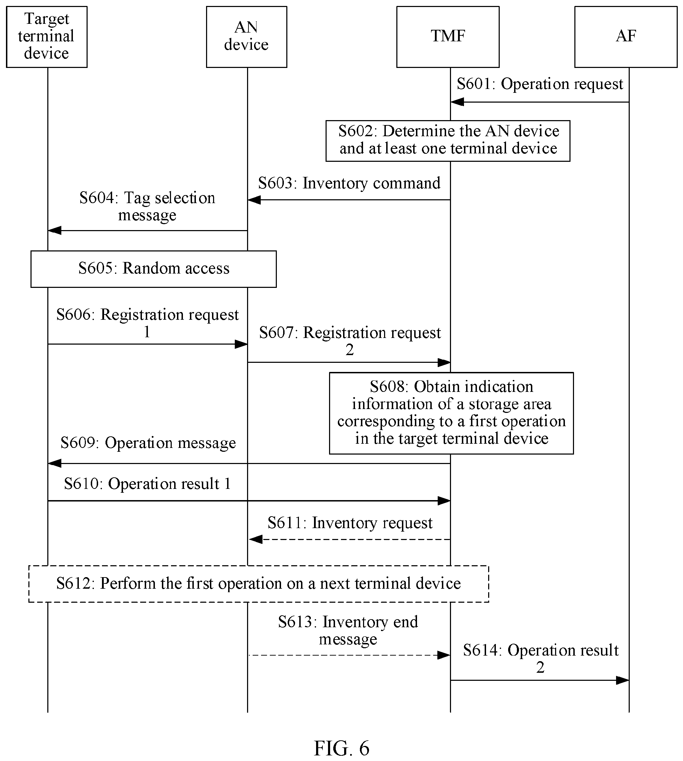

An embodiment of this application provides still another communication method. The method is a possible example of the method shown in FIG. 4. Refer to a flowchart shown in FIG. 6. The following specifically describes a procedure of the method by using an example in which a core network element is a TMF.

S601: An AF sends an operation request to the TMF, where the operation request is used to request to perform a first operation on at least one terminal device.

A terminal device in the at least one terminal device may be a passive terminal device such as a passive tag or a semi-passive tag.

The first operation may be at least one of the following: a read operation, a write operation, an access operation, a kill operation, a lock operation, a block write operation, a block erase operation, and an EPC write operation. For example, when the first operation is a read operation, the operation request may be a read request. For another example, when the first operation is a write operation, the operation request may be a write request.

The operation request may include indication information of a target area and indication information of a target object.

The target area is an area in which the first operation needs to be performed on the terminal device. The indication information of the target area may be at least one of the following: geographical location information, municipal location information (for example, city A), and 3GPP location information (for example, a tracking area (tracking area, TA) list or a cell (Cell) list). For example, if the indication information of the target area is city A, it indicates that the AF requests to perform the first operation on a terminal device in city A. For another example, if the indication information of the target area is a cell 1 and a cell 2, it indicates that the AF requests to perform the first operation on terminal devices in the cell 1 and the cell 2.

The indication information of the target object may be indication information of the at least one terminal device. There may be a plurality of specific forms of the indication information of the terminal device. The following lists several possible forms. Several forms listed below may be used independently or in combination. This is not limited in embodiments of this application.

Form 1: The indication information of the terminal device includes an EPC value interval. For example, if the EPC value interval is 1111000001 to 1111000098, the at least one terminal device may include a terminal device whose EPC is within the interval 1111000001 to 1111000098.

Form 2: The indication information of the terminal device includes an EPC list. For example, if the EPC list includes 1111000001, 1111000002, 1111000005, and 1111000006, the at least one terminal device may include terminal devices whose EPCs are 1111000001, 1111000002, 1111000005, and 1111000006.

Form 3: The indication information of the terminal device includes the first n bits of an EPC, where n is a positive integer. For example, if the EPC of the terminal device has 10 bits, and the first four bits are 1111, the at least one terminal device may include a terminal device whose EPC is 111100000 to 11111999999.

In some possible manners, the operation request may further include indication information of the first operation. The indication information of the first operation may be indication information having a correspondence with the first operation, for example, an identifier of the first operation. For example, the read operation corresponds to an operation identifier 1, and the write operation corresponds to an operation identifier 2. If the operation request includes the operation identifier 1, it indicates that the read operation is requested to be performed on the at least one terminal device.

In some other possible manners, the operation request may also be the indication information of the first operation. For example, when the operation request is a read request, the first operation is a read operation. For another example, when the operation request is a write request, the first operation is a write operation.

S602: The TMF determines an AN device and the at least one terminal device based on the operation request.

The TMF may determine the AN device based on the indication information of the target area in the operation request.

If the indication information of the target area includes the 3GPP location information, the TMF may determine one or more AN devices in the target area corresponding to the 3GPP location information. For example, the TMF may determine that one or more AN devices corresponding to a cell in the cell list are one or more AN devices in the target area.

If the indication information of the target area includes non-3GPP location information such as the geographical location information or the municipal location information, the TMF may map the non-3GPP location information to 3GPP location information. For example, the TMF maps the municipal location information to a TA list or a cell list, to determine one or more AN devices in the target area.

The TMF may determine the at least one terminal device based on the indication information of the target object in the operation request. For a correspondence between the indication information of the target object and the at least one terminal device, refer to the descriptions of "indication information of the at least one terminal device" in S601. Details are not described herein again.

Optionally, when the TMF determines, based on the indication information of the target object in the operation request, that the at least one terminal device includes a plurality of terminal devices, that is, the first operation needs to be performed on the plurality of terminal devices, the TMF may further determine that an inventory mode is a manner of reading EPCs of terminal devices one by one.

S603: The TMF sends an inventory command to the AN device, where the inventory command is used to request to obtain an EPC of the at least one terminal device, that is, is used to request to inventory the at least one terminal device.

The inventory command may include the indication information of the target object and a first specified identifier.

For specific content of the indication information of the target object, refer to S601. Details are not described herein again.

The first specified identifier may indicate the terminal device to send first information. The first information may include at least one of the following: a TID of the target terminal device, chip type information of the target terminal device, factory mark information of the target terminal device, and storage area information of the target terminal device. For specific content of the first specified identifier, refer to S401a1. For specific content of each piece of information in the first information, refer to S401. Details are not described herein again.

Optionally, when the TMF determines that the inventory mode is a manner of reading EPCs of terminal devices one by one, the inventory command includes the first specified identifier.

S604: The AN device sends a tag selection message to one or more terminal devices.

The tag selection message may include the indication information of the target object and the first specified identifier.

Optionally, the AN device may determine, based on the indication information of the target object, the one or more terminal devices that are in a coverage area of the AN device in the at least one terminal device, and then the AN device sends the tag selection message to the one or more terminal devices.

S605: The target terminal device accesses the AN device by using a random access procedure.

The target terminal device is a terminal device that successfully accesses the AN device by using the random access procedure in the one or more terminal devices. For specific content of the random access procedure, refer to S401a2. Details are not described herein again.

S606: The target terminal device sends a registration request 1 to the AN device.

The registration request 1 may include the first information and an EPC of the target terminal device.

Optionally, when the tag selection message includes the first specified identifier, and the target terminal device is the at least one terminal device indicated by the indication information of the target object, the target terminal device may send the registration request 1 to the AN device. For example, the tag selection message includes the first specified identifier. The indication information of the target object includes the first four bits of the EPC of the terminal device, and the first four bits are 1111. If the EPC of the target terminal device is 1111220000, the target terminal device may send the registration request 1 to the AN device.

S607: The AN device sends a registration request 2 to the TMF.

The registration request 2 may include the first information and the EPC of the target terminal device.

The registration request 1 and the registration request 2 may be the same or may be different. When the registration request 1 is the same as the registration request 2, the AN device forwards the registration request from the target terminal device to the TMF. When the registration request 1 is different from the registration request 2, for example, the AN device may process (for example, encapsulate) the registration request from the target terminal device, and then send the registration request 2 to the TMF.

S608: The TMF obtains, based on the first information, indication information (that is, second information) of a storage area corresponding to the first operation in the target terminal device.

For specific content of S608, refer to the descriptions of "the TMF may obtain the second information based on the first information" in S401. Details are not described herein again.

S609: The TMF sends an operation message to the target terminal device, where the operation message is used to request to perform the first operation on the target terminal device.

The operation message includes the second information. For specific content of the second information, refer to S401. Details are not described herein again.

In some possible manners, the operation message further includes the indication information of the first operation. For specific content of the indication information of the first operation, refer to S601. Details are not described herein again.

In some other possible manners, the operation message may also be the indication information of the first operation. For example, when the operation message is a read operation message, the first operation is a read operation. For another example, when the operation message is a write operation message, the first operation is a write operation.

S610: The target terminal device sends an operation result 1 to the TMF.

The operation result 1 is a result of performing the first operation by the target terminal device based on the second information. For specific content of S610, refer to S403. Details are not described herein again.

S611: The TMF sends an inventory request to the AN device, where the inventory request is used to request to obtain an EPC of a next terminal device, that is, is used to request to inventory the next terminal device.

The inventory request may include information indicating at least one of the following: completing the first operation on the target terminal device, querying the EPC of the next terminal device, or performing a next random access procedure.

S612: Perform the first operation on the next terminal device.

For a process of performing the first operation on the next terminal device, reference may be made to S604 to S611, and only the target terminal device is replaced with the next terminal device. Details are not described herein again.

S613: When the AN device no longer receives feedback information of the terminal device, the AN device sends an inventory end message to the TMF, where the inventory end message indicates to end the first operation on the at least one terminal device.

The feedback information of the terminal device may include at least one of the following: the operation result 1 fed back by the terminal device, the EPC of the terminal device, or a third random number fed back by the terminal device.

S614: The TMF sends an operation result 2 to the AF.

The operation result 2 may include the operation result 1 fed back by the at least one terminal device and the EPC of the at least one terminal device.

In the method shown in FIG. 6, S611 to S613 are optional steps. For example, when the at least one terminal device is one terminal device, the method shown in FIG. 6 may not include S611 to S613. For another example, when the TMF determines that the operation result 1 of the at least one terminal device is received, the method shown in FIG. 6 may not include S611 to S613.

According to the method shown in FIG. 6, when the first operation is performed on the terminal device, the TMF may obtain, from the terminal device, the first information used to determine the second information, where the second information indicates the storage area corresponding to the first operation in the target terminal device. When instructing to perform the first operation on the target terminal device, the TMF may send the second information to the target terminal device, so that the terminal device can determine the storage area corresponding to the first operation, thereby improving efficiency of operating the terminal device.

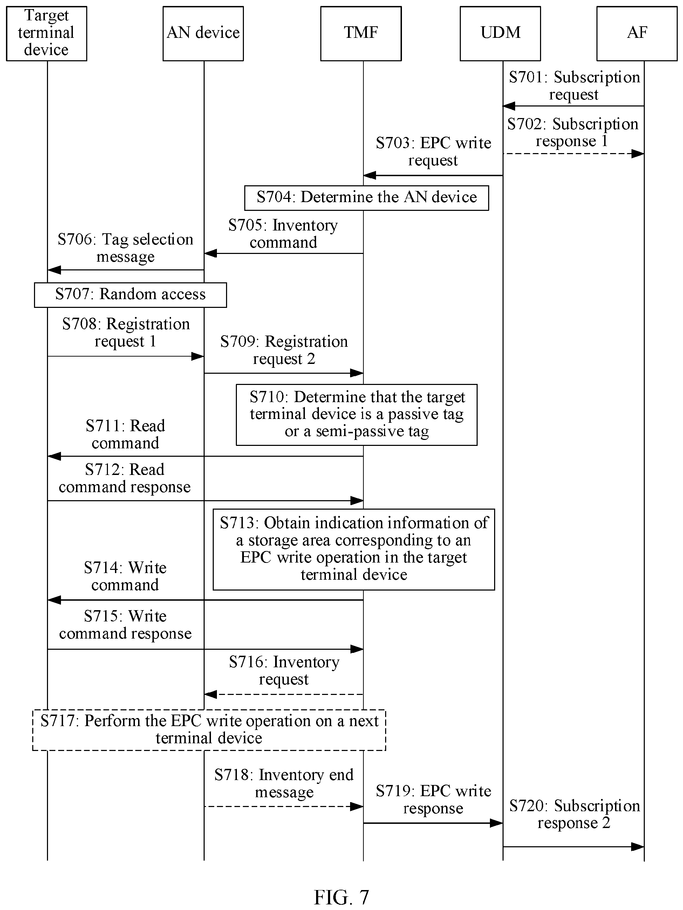

An embodiment of this application provides yet another communication method. The method is another possible example of the method shown in FIG. 4. Refer to a flowchart shown in FIG. 7. The following specifically describes a procedure of the method by using an example in which a core network element is a TMF.

S701: An AF sends a subscription request to a UDM, where the subscription request is used to request to write an EPC into at least one terminal device.

A terminal device in the at least one terminal device may be a passive terminal device such as a passive tag or a semi-passive tag. In addition, the terminal device in the at least one terminal device may be a blank tag. The blank tag may be a tag into which a uniquely specified EPC is not written. For example, the uniquely specified EPC may be specified by the AF.

The AF may directly send the subscription request to the UDM, or may send the subscription request to the UDM through another network element (for example, an NEF).

In addition, the subscription request may include indication information of a target area and indication information of an EPC range. For specific content of the indication information of the target area, refer to S601. Details are not described herein again.

There may be a plurality of specific forms of the indication information of the EPC range. The following lists several possible forms. Several forms listed below may be used independently or in combination. This is not limited in embodiments of this application.

Form 1: The indication information of the EPC range includes an EPC value interval. For example, the EPC value interval is 1111000001 to 1111000098.

Form 2: The indication information of the EPC range includes an EPC list. For example, the EPC list includes 1111000001, 1111000002, 1111000005, and 1111000006.

Form 3: The indication information of the EPC range includes the first n bits of an EPC, where n is a positive integer. For example, if the EPC of the terminal device has 10 bits, and the first four bits are 1111, the EPC range is 111100000 to 11111999999.

In addition, the subscription request may further include first type indication information. The first type indication information may indicate that the at least one terminal device is a passive tag or a semi-passive tag.

Optionally, after receiving the subscription request, the UDM may store one or more of the indication information of the target area, the indication information of the EPC range, and the first type indication information.

S702: The UDM sends a subscription response 1 to the AF, where the subscription response 1 indicates that the at least one terminal device subscribes to the EPC.

For example, after attaching a blank tag to at least one product, Company A may send a subscription request to the UDM through an AF of Company A, to request to write an EPC into the blank tag on the at least one product. After Company A pays for an operator to which the UDM belongs, the UDM may send a subscription response 1 to the AF.

S703: The UDM sends an EPC write request to the TMF, where the EPC write request is used to request to write the EPC into the at least one terminal device.

The EPC write request may include the indication information of the target area and the indication information of the EPC range.

Optionally, the EPC write request further includes the first type indication information.

S704: The TMF determines an AN device based on the EPC write request.

The TMF may determine the AN device based on the indication information of the target area in the EPC write request. For specific content, refer to the manner in which "the TMF determines the AN device based on the indication information of the target area" in S602. Details are not described herein again.

In addition, the TMF may further store the EPC range indicated by the indication information of the EPC range.

S705: The TMF sends an inventory command to the AN device, where the inventory command is used to request to obtain an EPC of the at least one terminal device.

The inventory command may include first blank tag indication information. The first blank tag indication information is used to inventory a tag whose EPC storage area includes a default EPC or whose EPC storage area is blank. For example, the first blank tag indication information includes a default EPC and/or a first TID. When an EPC of the terminal device is the default EPC or a TID of the terminal device is the first TID, the terminal device may be considered as a blank tag. The default EPC may be obtained by the TMF from another network element (for example, the UDM), and the first TID may be obtained by the TMF from the AF. For example, the first TID may be the TID in the first type indication information in S701.

S706: The AN device sends a tag selection message to one or more terminal devices.

The AN device may select the one or more terminal devices based on the default EPC and/or the first TID. For example, the AN device may determine that the one or more terminal devices include a terminal device whose EPC is the default EPC. For another example, the AN device may determine that the one or more terminal devices include a terminal device whose TID is the first TID.

S707: The target terminal device accesses the AN device by using a random access procedure.

The target terminal device is a terminal device that successfully accesses the AN device in the one or more terminal devices.

For specific content of the random access procedure, refer to S401a2. Details are not described herein again.

S708: The target terminal device sends a registration request 1 to the AN device.

The registration request 1 includes the default EPC of the target terminal device.

Optionally, the registration request 1 further includes type indication information of the target terminal device. For the type indication information of the target terminal device, reference may be made to the descriptions of the first type indication information in S701, and only the at least one terminal device is replaced with the target terminal device. Details are not described herein again.

S709: The AN device sends a registration request 2 to the TMF.

The registration request 2 includes the default EPC of the target terminal device.

Optionally, the registration request 2 further includes the type indication information of the target terminal device.

S710: The TMF determines that the target terminal device is a passive tag or a semi-passive tag.

The TMF may determine, based on the first type indication information in S703 or the type indication information of the target terminal device in S709, that the target terminal device is a passive tag or a semi-passive tag.

In addition, the TMF may further determine, based on the default EPC in the registration request 2, that the target terminal device is a blank tag.

S711: The TMF sends a read command to the target terminal device, where the read command is used to read first information.

The first information may include at least one of the following: a TID of the target terminal device, chip type information of the target terminal device, factory mark information of the target terminal device, and storage area information of the target terminal device. For specific content of the first information, refer to S401. Details are not described herein again.

S712: The target terminal device sends a read command response to the TMF, where the read command response includes the first information.

S713: The TMF obtains, based on the first information, indication information (that is, second information) of a storage area corresponding to an EPC write operation in the target terminal device.

For specific content of S713, reference may be made to the descriptions of "the TMF may obtain the second information based on the first information" in S401, and only the first operation is replaced with the EPC write operation. For specific content of the second information, refer to the descriptions of "the second information" in S401. Details are not described herein again.

S714: The TMF sends a write command to the target terminal device.

The write command includes an EPC (referred to as a first EPC below) allocated to the target terminal device and the second information. The first EPC belongs to the range indicated by the indication information of the EPC range.

S715: After writing the first EPC, the target terminal device sends a write command response to the TMF, where the write command response indicates that the first EPC has been written into the target terminal device.

The target terminal device may write the first EPC into the storage area indicated by the second information. The first EPC may cover the default EPC.

For example, if the target terminal device is a terminal device of a type 1, for specific content of the storage area of the terminal device of the type 1, reference may be made to step A1. In the second information, an identifier is 1. The target terminal device may determine that the storage area corresponding to the identifier 1 is the EPC storage area, and corresponds to the bank 01 in the memory bank. The target terminal device may write an EPC into the bank 01 in the memory bank. After writing the EPC, the target terminal device may send the write command response to the TMF, where the write command response includes information indicating that the EPC write operation is completed on the target terminal device.

S716: The TMF sends an inventory request to the AN device, where the inventory request is used to request to obtain an EPC of a next terminal device, that is, is used to request to inventory the next terminal device.

For specific content of S716, refer to S611. Details are not described herein again.

S717: Perform the EPC write operation on the next terminal device.

For a process of performing the EPC write operation on the next terminal device, reference may be made to S706 to S716, and only the target terminal device is replaced with the next terminal device. Details are not described herein again.

S718: The AN device sends an inventory end message to the TMF, where the inventory end message indicates to end the EPC write operation on the at least one terminal device.

In some possible manners, after writing all EPCs that are in the EPC range and that are indicated by the indication information of the EPC range into the terminal device, the AN device may perform S718.

In some other possible manners, a coverage area of the AN device may include a plurality of terminal devices that are subscribed to by Company A as blank tags. When the AN device no longer receives feedback information of the terminal device, the AN device may perform S718. The feedback information of the terminal device may include at least one of the following: the default EPC fed back by the terminal device, tag information of the terminal device, or a third random number fed back by the terminal device.

S719: The TMF sends an EPC write response to the UDM, where the EPC write response indicates that the EPC is successfully written into the at least one terminal device.

S720: The UDM sends a subscription response 2 to the AF.

The subscription response 2 includes an allocated EPC range and write success indication information.

In the method shown in FIG. 7, S702 and S716 to S718 are optional steps. For example, when the at least one terminal device is one terminal device, S716 to S718 are optional steps. For another example, when the TMF determines that the EPC has been written into the at least one terminal device, S716 to S718 are optional steps.

Optionally, in the method shown in FIG. 7, the UDM may also be replaced with the UDR.

According to the method shown in FIG. 7, when the EPC is written into the at least one terminal device, the TMF may obtain, from the terminal device, the first information used to determine the second information, where the second information indicates the storage area corresponding to the first operation in the target terminal device. When instructing to perform the first operation on the target terminal device, the TMF may send the second information to the target terminal device, so that the terminal device can determine the storage area corresponding to the first operation, thereby improving efficiency of operating the terminal device.

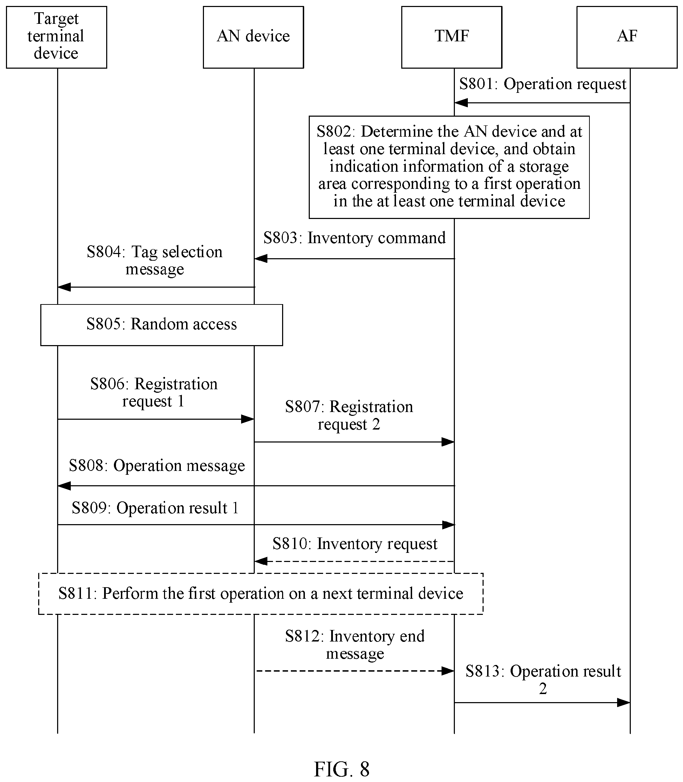

An embodiment of this application provides yet another communication method. The method is still another possible example of the method shown in FIG. 4. Refer to a flowchart shown in FIG. 8. The following specifically describes a procedure of the method by using an example in which a core network element is a TMF.

S801: An AF sends an operation request to the TMF, where the operation request is used to request to perform a first operation on at least one terminal device.

A terminal device in the at least one terminal device may be a passive terminal device such as a passive tag or a semi-passive tag.

For specific content of the operation request and the first operation, refer to S601. Repeated parts are not described.

In addition, the operation request further includes first information.

The first information may include at least one of the following: a TID of the at least one terminal device, chip type information of the at least one terminal device, factory mark information of the at least one terminal device, and storage area information of the at least one terminal device. For specific content of each piece of information in the first information, reference may be made to S401, and only the target terminal device is replaced with the at least one terminal device. Details are not described herein again.

S802: The TMF determines an AN device and the at least one terminal device based on the operation request, and obtains indication information (that is, second information) of a storage area corresponding to the first operation in the at least one terminal device.

For specific content of determining the AN device and the at least one terminal device by the TMF based on the operation request, refer to S602. Details are not described herein again.

Optionally, when the TMF determines, based on indication information of a target object in the operation request, that the at least one terminal device includes a plurality of terminal devices, that is, the first operation needs to be performed on the plurality of terminal devices, the TMF may further determine that an inventory mode is a manner of reading EPCs of terminal devices one by one.

In addition, for specific content of obtaining, by the TMF, the indication information (that is, the second information) of the storage area corresponding to the first operation in the at least one terminal device, reference may be made to the descriptions of "the TMF may obtain the second information based on the first information" in S401, and only the target terminal device is replaced with the at least one terminal device. Details are not described herein again.

S803: The TMF sends an inventory command to the AN device, where the inventory command is used to request to obtain an EPC of the at least one terminal device, that is, is used to request to inventory the at least one terminal device.

The inventory command may include the indication information of the target object. For specific content of the indication information of the target object, refer to S601. Details are not described herein again.

Optionally, when the TMF determines that the inventory mode is a manner of reading EPCs of terminal devices one by one, the inventory command further includes a third specified identifier. The third specified identifier may indicate that the inventory mode is a manner of reading EPCs of terminal device one by one.

S804: The AN device sends a tag selection message to one or more terminal devices.

The tag selection message may include the indication information of the target object.

Optionally, when the TMF determines that the inventory mode is a manner of reading EPCs of terminal device one by one, the tag selection message further includes a third specified identifier.

For a manner in which the AN device sends the tag selection message, refer to S604. Details are not described herein again.

S805: The target terminal device accesses the AN device by using a random access procedure.

For specific content of S805, refer to S605. Details are not described herein again.

S806: The target terminal device sends a registration request 1 to the AN device.

The registration request 1 includes an EPC of the target terminal device.

S807: The AN device sends a registration request 2 to the TMF.

The registration request 2 includes the EPC of the target terminal device.

S808: The TMF sends an operation message to the target terminal device, where the operation message is used to request to perform the first operation on the target terminal device.

S809: The target terminal device sends an operation result 1 to the TMF.

S810: The TMF sends an inventory request to the AN device, where the inventory request is used to request to obtain an EPC of a next terminal device.

S811: Perform the first operation on the next terminal device.

For a process of performing the first operation on the next terminal device, reference may be made to S804 to S810, and only the target terminal device is replaced with the next terminal device. Details are not described herein again.

S812: When the AN device no longer receives feedback information of the terminal device, the AN device sends an inventory end message to the TMF, where the inventory end message indicates to end the first operation on the at least one terminal device.

S813: The TMF sends an operation result 2 to the AF.

For specific content of S808 to S813, refer to S609 to S614. Details are not described herein again.

In some possible manners, the TMF may not obtain the indication information of the storage area corresponding to the first operation in the at least one terminal device in S802. Before S808, the TMF obtains the indication information of the storage area corresponding to the first operation in the target terminal device.

In some possible manners, the first information in S801 may include the second information. When the at least one terminal device includes M terminal devices that belong to a same production batch, and the M terminal devices include the target terminal device, the second information may be applicable to the M terminal devices. In other words, the second information indicates the storage area corresponding to the first operation in the M terminal devices. M is an integer greater than 1. The second information may also be information dedicated to indicating the storage area corresponding to the first operation in the target terminal device. In S802, the TMF may store the second information.

According to the method shown in FIG. 8, when the first operation is performed on the terminal device, the TMF may obtain, from the AF, the first information used to determine the second information, where the second information indicates the storage area corresponding to the first operation in the target terminal device. When instructing to perform the first operation on the target terminal device, the TMF may send the second information to the target terminal device, so that the terminal device can determine the storage area corresponding to the first operation, thereby improving efficiency of operating the terminal device.

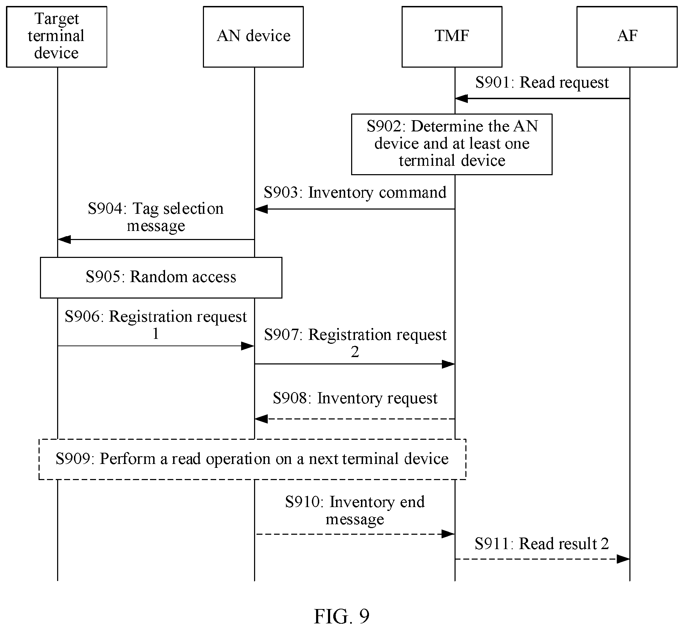

An embodiment of this application provides yet another communication method. The method is a possible example of the method shown in FIG. 5. Refer to a flowchart shown in FIG. 9. The following specifically describes a procedure of the method by using an example in which a core network element is a TMF.

S901: An AF sends a read request to the TMF, where the read request is used to request to read data in at least one terminal device.

A terminal device in the at least one terminal device may be a passive terminal device such as a passive tag or a semi-passive tag.

In addition, the terminal device in the at least one terminal device is a terminal device having a single storage area. In other words, the terminal device in the at least one terminal device has only one storage area.

The read request may include indication information of a target area and indication information of a target object. For specific content of the indication information of the target area and the indication information of the target object, refer to S601. Details are not described herein again.

For specific content of the read request, refer to the descriptions of the first request in S501. Details are not described herein again.

S902: The TMF determines an AN device and the at least one terminal device based on the read request.

The TMF may determine the AN device based on the indication information of the target area in the read request, and determine the at least one terminal device based on the indication information of the target object in the read request. For specific content, refer to the manner in which the TMF determines the AN device based on the indication information of the target area and the TMF determines the at least one terminal device based on the indication information of the target object in S602. Details are not described herein again.

S903: The TMF sends an inventory command to the AN device, where the inventory command is used to request to obtain an EPC of the at least one terminal device, that is, is used to request to inventory the at least one terminal device.

The inventory command may include the indication information of the target object and a first indication. For specific content of the indication information of the target object, refer to S601. The first indication may indicate the target terminal device to send data in the target terminal device. For specific content, refer to S502. Details are not described herein again.

Optionally, when the TMF determines that the inventory mode is a manner of reading EPCs of terminal devices one by one, the inventory command includes the first indication.

S904: The AN device sends a tag selection message to one or more terminal devices.

The tag selection message may include at least one of the following: the indication information of the target object and the first indication.

For a manner in which the AN device sends the tag selection message, refer to S604. Details are not described herein again.

S905: The target terminal device accesses the AN device by using a random access procedure.

For specific content of S905, refer to S605. Details are not described herein again.

S906: The target terminal device sends a registration request 1 to the AN device.

When the tag selection message includes the first indication, the registration request 1 includes an EPC of the target terminal device and the data in the target terminal device. The data in the target terminal device is data in a storage area of the target terminal device, for example, temperature information measured and stored by the target terminal device.

S907: The AN device sends a registration request 2 to the TMF.

The registration request 2 may include at least one of the following: the EPC of the target terminal device and the data in the target terminal device.

S908: The TMF sends an inventory request to the AN device, where the inventory request is used to request to obtain an EPC of a next terminal device, that is, is used to request to inventory the next terminal device.

S909: Perform a read operation on the next terminal device.

For a process of performing the read operation on the next terminal device, reference may be made to S904 to S908, and only the target terminal device is replaced with the next terminal device. Details are not described herein again.

S910: When the AN device no longer receives feedback information of the terminal device, the AN device sends an inventory end message to the TMF, where the inventory end message indicates to end the read operation on the at least one terminal device.

The feedback information of the terminal device may include at least one of the following: the data in the terminal device, the EPC of the terminal device, or a third random number fed back by the terminal device.

S911: The TMF sends a read result 2 to the AF.

The read result may include the data in the at least one terminal device and the EPC of the at least one terminal device.

S908 to S911 are optional steps. For example, when the at least one terminal device is one terminal device, S908 to S910 are optional steps. For another example, when the TMF determines that the data in the at least one terminal device has been read, S908 to S910 are optional steps. For another example, after S907, the TMF sends the EPC of the target terminal device and the data in the target terminal device to the AF. In this case, S911 is an optional step.

According to the method shown in FIG. 9, when the storage area of the target terminal device is a single storage area, the TMF may send the first indication to the target terminal device, and after receiving the first indication, the target terminal device may send the data in the target terminal device to the TMF by using the registration request, so that the TMF does not need to send a read command to the target terminal device. This can simplify a procedure of obtaining data from a terminal device having a single storage area, and reduce overheads.

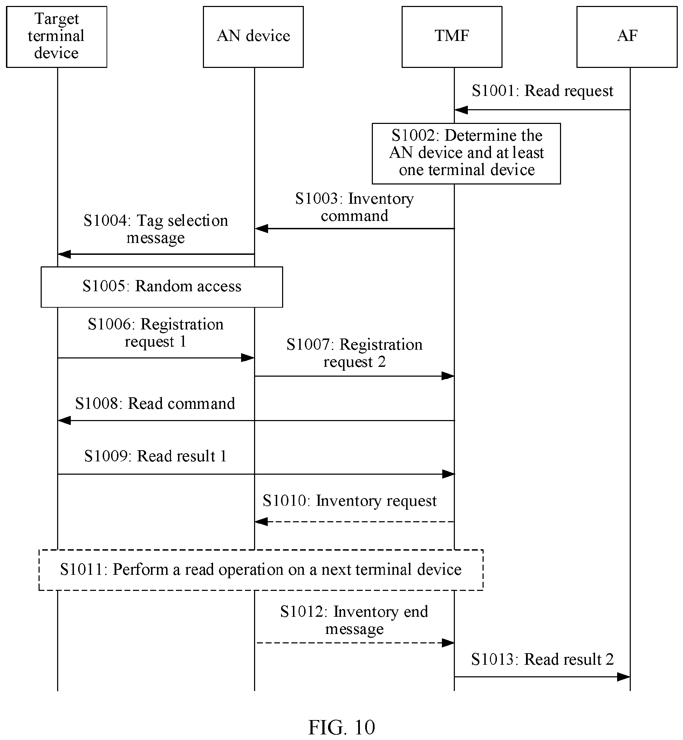

An embodiment of this application provides yet another communication method. Refer to a flowchart shown in FIG. 10. The following specifically describes a procedure of the method by using an example in which a core network element is a TMF.

S1001: An AF sends a read request to the TMF, where the read request is used to request to read data in at least one terminal device.

S1002: The TMF determines an AN device and the at least one terminal device based on the read request.

For specific content of S1001 and S1002, refer to S901 and S902.

S1003: The TMF sends an inventory command to the AN device, where the inventory command is used to request to obtain an EPC of the at least one terminal device, that is, is used to request to inventory the at least one terminal device.

The inventory command includes indication information of a target object. For specific content of the indication information of the target object, refer to S601. Details are not described herein again.

S1004: The AN device sends a tag selection message to one or more terminal devices.

The tag selection message may include the indication information of the target object.

For a manner in which the AN device sends the tag selection message, refer to S604. Details are not described herein again.

S1005: The target terminal device accesses the AN device by using a random access procedure.

For specific content of S1005, refer to S605. Details are not described herein again.

S1006: The target terminal device sends a registration request 1 to the AN device.

S1007: The AN device sends a registration request 2 to the TMF.

The registration request 1 and the registration request 2 may include an EPC of the target terminal device.

Optionally, the registration request 1 and the registration request 2 further include a fourth specified identifier. The fourth specified identifier may indicate that a storage area of the terminal device is a single storage area. The fourth specified identifier is, for example, tag type indication information, and the tag type indication information may indicate that the storage area of the target terminal device is a single storage area. For specific content of the tag type indication information, refer to S501. Details are not described herein again.

S1008: The TMF sends a read command to the target terminal device, where the read command is used to read data in the target terminal device.

The read command does not include indication information of a storage area corresponding to a read operation in the target terminal device.

Before sending the read command to the target terminal device, the TMF may determine, based on the read request, that the storage area of the target terminal device is a single storage area. The read request may indicate that the storage area of the target terminal device is a single storage area. For a specific manner, refer to the manner in which the first request indicates that the storage area of the target terminal device is a single storage area in S501. Details are not described herein again.

Optionally, the read command includes information indicating that the storage area of the target terminal device is a single storage area.

S1009: The target terminal device sends a read result 1 to the TMF.

The read result 1 includes the data in the target terminal device.

S1010: The TMF sends an inventory request to the AN device, where the inventory request is used to request to obtain an EPC of a next terminal device, that is, is used to request to inventory the next terminal device.

S1011: Perform a read operation on the next terminal device.

For a process of performing the read operation on the next terminal device, reference may be made to S1004 to S1010, and only the target terminal device is replaced with the next terminal device. Details are not described herein again.

S1012: When the AN device no longer receives feedback information of the terminal device, the AN device sends an inventory end message to the TMF, where the inventory end message indicates to end the read operation on the at least one terminal device.

For specific content of S1010 to S1012, refer to S909 to S911. Details are not described herein again.

S1013: The TMF sends a read result 2 to the AF.

The read result 2 may include the data in the at least one terminal device and the EPC of the at least one terminal device.

S1010 to S1013 are optional steps. For example, when the at least one terminal device is one terminal device, S1010 to S1012 are optional steps. For another example, when the TMF determines that the data in the at least one terminal device has been read, S1010 to S1012 are optional steps. For another example, after S1009, the TMF sends the EPC of the target terminal device and the data in the target terminal device to the AF. In this case, S1013 is an optional step.

According to the method shown in FIG. 10, when the storage area of the target terminal device is a single storage area, the AF may notify, in the read request, the TMF that the storage area of the target terminal device is a single storage area, and then the TMF may perform the read operation on the target terminal device to obtain the data in the target terminal device.

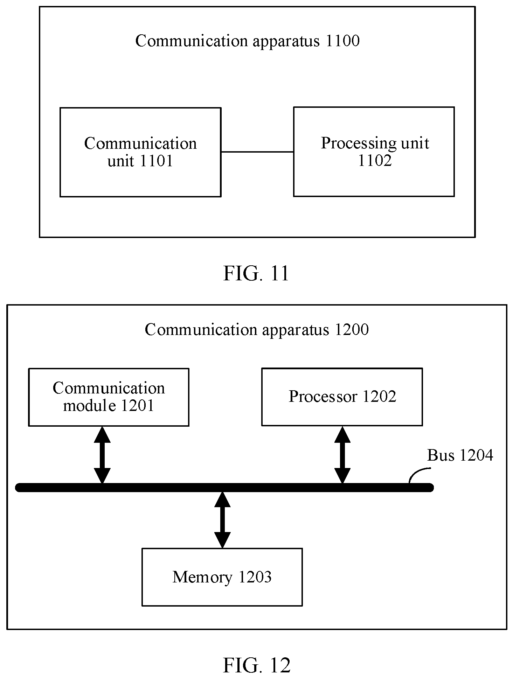

Based on a same technical concept as the method embodiments in FIG. 4 to FIG. 10, an embodiment of this application provides a communication apparatus shown in FIG. 11, and the communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 11, and includes a communication unit 1101 and a processing unit 1102. The communication apparatus 1100 may be used in the TMF in the communication system shown in FIG. 3, or the communication apparatus 1100 may be used in the terminal device in the communication system shown in FIG. 2 or FIG. 3, and may implement the communication method provided in the foregoing embodiments and examples of this application. The following describes functions of the units in the communication apparatus 1100.

The communication unit 1101 is configured to receive and send data.

When the communication apparatus 1100 is used in the TMF, the communication unit 1101 may be implemented as a physical interface, a communication module, a communication interface, or an input/output interface. The communication apparatus 1100 may be connected to a network cable or a cable by using the communication unit, to establish a physical connection to another device.

When the communication apparatus 1100 is used in the terminal device, the communication unit 1101 may be implemented as a transceiver, for example, a mobile communication module. The mobile communication module may include at least one antenna, at least one filter, a switch, a power amplifier, a low noise amplifier (low noise amplifier, LNA), and the like.

The processing unit 1102 may be configured to support the communication apparatus 1100 in performing the processing actions in the foregoing method embodiments. The processing unit 1102 may be implemented as a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 1100 is used in the core network element in the embodiment of this application shown in FIG. 4, or is used in the TMF in the embodiment of this application shown in any one of FIG. 6 to FIG. 8. The following describes specific functions of the processing unit 1102 in the implementation.

The processing unit 1102 is configured to: obtain first information of a target terminal device, where the first information is used to determine second information, and the second information indicates a storage area corresponding to a first operation in the target terminal device; send the second information and indication information of the first operation to the target terminal device by using the communication unit 1101; and receive, by using the communication unit 1101, a result of performing the first operation by the target terminal device based on the second information.

Optionally, the first information includes at least one of the following: a tag identifier TID of the target terminal device, chip type information of the target terminal device, factory mark information of the target terminal device, storage area information of the target terminal device, and the second information.

Optionally, the processing unit 1102 is specifically configured to: send, by using the communication unit 1101, a first message to the target terminal device through an access network device, where the first message is used to trigger the target terminal device to initiate a random access procedure; and receive a registration request from the target terminal device by using the communication unit 1101, where the registration request includes the first information.

Optionally, the processing unit 1102 is specifically configured to: send a read command to the target terminal device by using the communication unit 1101, where the read command is used to read the first information in the target terminal device; and receive a read command response from the target terminal device by using the communication unit 1101, where the read command response includes the first information.

Optionally, the processing unit 1102 is specifically configured to: before sending the read command to the target terminal device, determine that the target terminal device is a passive tag or a semi-passive tag.

Optionally, the processing unit 1102 is specifically configured to: obtain tag type indication information of the target terminal device from a first network element or the target terminal device by using the communication unit 1101, and determine, based on the tag type indication information, that the target terminal device is a passive tag or a semi-passive tag.

Optionally, the processing unit 1102 is specifically configured to receive, by using the communication unit 1101, a service request from an application function network element, where the service request includes the first information.

Optionally, when the first information includes one or more of the TID of the target terminal device, the chip type information of the target terminal device, and the factory mark information of the target terminal device, the processing unit 1102 is specifically configured to: before sending the second information and the indication information of the first operation to the target terminal device, obtain a correspondence between the first information and the storage area corresponding to the first operation in the target terminal device, and determine the second information based on the correspondence and the first information.

Optionally, the processing unit 1102 is specifically configured to: obtain the locally stored correspondence between the first information and the storage area corresponding to the first operation in the target terminal device, or obtain, from a second network element by using the communication unit 1101, the correspondence between the first information and the storage area corresponding to the first operation in the target terminal device.

Optionally, when the first information includes one or more of the TID of the target terminal device, the chip type information of the target terminal device, and the factory mark information of the target terminal device, before sending the second information and the indication information of the first operation to the target terminal device, the processing unit 1102 is specifically configured to: send the first information to a third network element by using the communication unit 1101, and receive, by using the communication unit 1101, the second information determined by the third network element based on the first information.

Optionally, when the first information includes the storage area information of the target terminal device, the processing unit 1102 is specifically configured to: before sending the second information and the indication information of the first operation to the target terminal device, determine the second information based on the storage area information of the target terminal device and the indication information of the first operation.

Optionally, the processing unit 1102 is specifically configured to send an operation message to the target terminal device by using the communication unit 1101, where the operation message indicates to perform the first operation on the target terminal device, and the operation message includes the second information and the indication information of the first operation.

Optionally, the first operation is one or more of a read operation, a write operation, an access operation, a kill operation, a lock operation, a block write operation, a block erase operation, and an electronic product code EPC write operation.

Optionally, the second information includes an identifier of the storage area corresponding to the first operation in the target terminal device.

Optionally, the second information further includes at least one of the following: a pointer value, indicating a position at which the first operation starts to be performed in the storage area; a length, indicating a length of data for performing the first operation in the storage area; and a mask or a wildcard mask, indicating a mask or a wildcard mask used to perform the first operation in the storage area.

In another implementation, the communication apparatus 1100 is used in the target terminal device in the embodiment of this application shown in any one of FIG. 4 and FIG. 6 to FIG. 8. The following describes specific functions of the processing unit 1102 in the implementation.

The processing unit 1102 is configured to: send first information to a core network element by using the communication unit 1101, where the first information is used to determine second information, and the second information indicates a storage area corresponding to a first operation in the target terminal device; receive the second information and indication information of the first operation from the core network element by using the communication unit 1101; and send, by using the communication unit 1101 to the core network element, a result of performing the first operation by the target terminal device based on the second information.

Optionally, the first information includes at least one of the following: a tag identifier TID of the target terminal device, chip type information of the target terminal device, factory mark information of the target terminal device, and storage area information of the target terminal device.

Optionally, the processing unit 1102 is specifically configured to: before sending the first information to the core network element, receive, by using the communication unit 1101, a first message sent by the core network element through an access network device, where the first message is used to trigger the target terminal device to initiate a random access procedure; and send a registration request to the core network element by using the communication unit 1101, where the registration request includes the first information.

Optionally, the processing unit 1102 is specifically configured to: before sending the first information to the core network element, receive a read command from the core network element by using the communication unit 1101, where the read command is used to read the first information in the target terminal device; and send a read command response to the core network element by using the communication unit 1101, where the read command response includes the first information.

Optionally, the processing unit 1102 is specifically configured to: before receiving the read command from the core network element, send tag type indication information of the target terminal device to the core network element by using the communication unit 1101, where the tag type indication information indicates that the target terminal device is a passive tag or a semi-passive tag.

Optionally, the processing unit 1102 is specifically configured to receive an operation message from the core network element by using the communication unit 1101, where the operation message indicates to perform the first operation on the target terminal device, and the operation message includes the second information and the indication information of the first operation.

Optionally, the first operation is one or more of a read operation, a write operation, an access operation, a kill operation, a lock operation, a block write operation, a block erase operation, and an electronic product code EPC write operation.

Optionally, the second information includes an identifier of the storage area corresponding to the first operation in the target terminal device.

Optionally, the second information further includes at least one of the following: a pointer value, indicating a position at which the first operation starts to be performed in the storage area; a length, indicating a length of data for performing the first operation in the storage area; and a mask or a wildcard mask, indicating a mask or a wildcard mask used to perform the first operation in the storage area.

In still another implementation, the communication apparatus 1100 is used in the core network element in the embodiment of this application shown in FIG. 5, or is used in the TMF in the embodiment of this application shown in FIG. 9. The following describes specific functions of the processing unit 1102 in the implementation.

The processing unit 1102 is configured to: receive a first request from an application function network element by using the communication unit 1101, where the first request is used to request to read data in a target terminal device, and the first request further indicates that a storage area of the target terminal device is a single storage area; send, by using the communication unit 1101, a first message to the target terminal device through an access network device, where the first message is used to trigger the target terminal device to initiate a random access procedure, the first message further includes a first indication, and the first indication indicates the target terminal device to send the data in the target terminal device; and receive, by using the communication unit 1101, a registration request sent by the target terminal device based on the first indication, where the registration request includes the data in the target terminal device.

In yet another implementation, the communication apparatus 1100 is used in the terminal device in the embodiment of this application shown in FIG. 5 or FIG. 9. The following describes specific functions of the processing unit 1102 in the implementation.

The processing unit 1102 is configured to: receive, by using the communication unit 1101, a first message sent by a core network element through an access network device, where the first message is used to trigger the target terminal device to initiate a random access procedure, the first message further includes a first indication, and the first indication indicates the target terminal device to send data in the target terminal device; and send a registration request to the core network element based on the first indication by using the communication unit 1101, where the registration request includes the data in the target terminal device.

It should be noted that, in the foregoing embodiments of this application, module division is an example, and is merely a logical function division. During actual implementation, another division manner may be used. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 12, and the communication apparatus may be configured to perform related steps in the foregoing method embodiment. The communication apparatus 1100 may be used in the TMF in the communication system shown in FIG. 3, or the communication apparatus 1100 may be used in the terminal device in the communication system shown in FIG. 2 or FIG. 3, may implement the communication method provided in the foregoing embodiments and examples of this application, and have functions of the communication apparatus shown in FIG. 11. As shown in FIG. 12, the communication apparatus 1200 includes a communication module 1201, a processor 1202, and a memory 1203. The communication module 1201, the processor 1202, and the memory 1203 are connected to each other.

Optionally, the communication module 1201, the processor 1202, and the memory 1203 are connected to each other by using a bus 1204. The bus 1204 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line represents the bus in FIG. 12, but this does not mean that there is only one bus or only one type of bus.

The communication module 1201 is configured to receive and send data, to implement communication interaction with another device. For example, the communication module 1201 may be implemented as a physical interface, a communication module, a communication interface, or an input/output interface.

The processor 1202 may be configured to support the communication apparatus 1200 in performing the processing action in the foregoing method embodiment. When the communication apparatus 1200 is configured to implement the foregoing method embodiment, the processor 1202 may be further configured to implement the functions of the foregoing processing unit 1102. The processor 1202 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 1200 is used in the core network element in the embodiment of this application shown in FIG. 4, or is used in the TMF in the embodiment of this application shown in any one of FIG. 6 to FIG. 8. The processor 1202 is specifically configured to: obtain first information of a target terminal device, where the first information is used to determine second information, and the second information indicates a storage area corresponding to a first operation in the target terminal device; send the second information and indication information of the first operation to the target terminal device by using the communication module 1201; and receive, by using the communication module 1201, a result of performing the first operation by the target terminal device based on the second information.

In another implementation, the communication apparatus 1200 is used in the target terminal device in the embodiment of this application shown in any one of FIG. 4 and FIG. 6 to FIG. 8. The processor 1202 is specifically configured to: send first information to a core network element by using the communication module 1201, where the first information is used to determine second information, and the second information indicates a storage area corresponding to a first operation in the target terminal device; receive the second information and indication information of the first operation from the core network element by using the communication module 1201; and send, by using the communication module 1201 to the core network element, a result of performing the first operation by the target terminal device based on the second information.

In still another implementation, the communication apparatus 1200 is used in the core network element in the embodiment of this application shown in FIG. 5, or is used in the TMF in the embodiment of this application shown in FIG. 9. The processor 1202 is specifically configured to: receive a first request from an application function network element by using the communication module 1201, where the first request is used to request to read data in a target terminal device, and the first request further indicates that a storage area of the target terminal device is a single storage area; send, by using the communication module 1201, a first message to the target terminal device through an access network device, where the first message is used to trigger the target terminal device to initiate a random access procedure, the first message further includes a first indication, and the first indication indicates the target terminal device to send the data in the target terminal device; and receive, by using the communication module 1201, a registration request sent by the target terminal device based on the first indication, where the registration request includes the data in the target terminal device.

In still another implementation, the communication apparatus 1200 is used in the terminal device in the embodiment of this application shown in FIG. 5 or FIG. 9. The processor 1202 is specifically configured to: receive, by using the communication module 1201, a first message sent by a core network element through an access network device, where the first message is used to trigger the target terminal device to initiate a random access procedure, the first message further includes a first indication, and the first indication indicates the target terminal device to send data in the target terminal device; and send a registration request to the core network element based on the first indication by using the communication module 1201, where the registration request includes the data in the target terminal device.

For specific functions of the processor 1202, refer to the descriptions in the communication methods provided in the foregoing embodiments and examples of this application, and the specific function descriptions of the communication apparatus 1100 in the embodiment of this application shown in FIG. 11. Details are not described herein again.

The memory 1203 is configured to store program instructions, data, and the like. Specifically, the program instructions may include program code, and the program code includes computer operation instructions. The memory 1203 may include a RAM, or may include a non-volatile memory (non-volatile memory), for example, at least one magnetic disk storage. The processor 1202 executes the program instructions stored in the memory 1203, and implements the foregoing functions by using the data stored in the memory 1203, to implement the communication methods provided in the foregoing embodiments of this application.

It may be understood that the memory 1203 in FIG. 12 of this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these memories and any memory of another proper type.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. By way of example, and not limitation, the computer-readable medium may include a RAM, a ROM, an EEPROM, a CD-ROM, or another optical disc storage or disk storage medium, or another magnetic storage device, or any other medium that can carry or store expected program code in a form of an instruction or a data structure and that can be accessed by the computer.

Based on the foregoing embodiments, an embodiment of this application further provides a chip. The chip is configured to read a computer program stored in a memory, to implement the methods provided in the foregoing embodiments.

According to the foregoing embodiments, an embodiment of this application provides a chip system. The chip system includes a processor, configured to support a computer apparatus in implementing the functions of the devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus. In the method, a core network element may obtain first information of a target terminal device, where the first information may be used to determine second information, and the second information indicates a storage area corresponding to a first operation in the target terminal device. Then, the core network element may send the second information and indication information of the first operation to the target terminal device, and receive a result of performing the first operation by the target terminal device based on the second information. According to the method, when instructing to operate the target terminal device, the core network element sends, to the target terminal device, the second information indicating the storage area corresponding to the first operation in the target terminal device, so that the terminal device can determine the storage area corresponding to the first operation, thereby improving efficiency of operating the terminal device.

In embodiments of this application, unless otherwise specified or a logical conflict occurs, terms and/or descriptions in different embodiments are consistent and may be referenced by each other. Technical features in different embodiments may be combined to form new embodiments based on internal logical relationships.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so as to generate computer-implemented processing. Therefore, the instructions executed on the computer or the another programmable device provide steps for implementing a specific function in one or more processes in the flowcharts and/or in one or more blocks in the block diagrams.

It is clear that persons skilled in the art can make various modifications and variations to this application without departing from the scope of this application. This application is also intended to cover these modifications and variations provided that they fall within the scope of protection defined by the following claims and their equivalent technologies.

## Claims

1. A communication method, comprising:
obtaining, by a core network element, first information of a target terminal device, wherein the first information is used to determine second information, and the second information indicates a storage area corresponding to a first operation in the target terminal device;
sending, by the core network element, the second information and indication information of the first operation to the target terminal device; and
receiving, by the core network element, a result of performing the first operation by the target terminal device based on the second information.

2. The method according to claim 1, wherein the first information comprises at least one of the following:
a tag identifier TID of the target terminal device, chip type information of the target terminal device, factory mark information of the target terminal device, storage area information of the target terminal device, and the second information.

3. The method according to claim 1 or 2, wherein the obtaining, by a core network element, first information of a target terminal device comprises:
sending, by the core network element, a first message to the target terminal device through an access network device, wherein the first message is used to trigger the target terminal device to initiate a random access procedure; and
receiving, by the core network element, a registration request from the target terminal device, wherein the registration request comprises the first information.

4. The method according to claim 1 or 2, wherein the obtaining, by a core network element, first information of a target terminal device comprises:
sending, by the core network element, a read command to the target terminal device, wherein the read command is used to read the first information in the target terminal device; and
receiving, by the core network element, a read command response from the target terminal device, wherein the read command response comprises the first information.

5. The method according to claim 4, wherein before the sending, by the core network element, a read command to the target terminal device, the method further comprises:
determining, by the core network element, that the target terminal device is a passive tag or a semi-passive tag.

6. The method according to claim 5, wherein the determining, by the core network element, that the target terminal device is a passive tag or a semi-passive tag comprises:
obtaining, by the core network element, tag type indication information of the target terminal device from a first network element or the target terminal device, and determining, based on the tag type indication information, that the target terminal device is a passive tag or a semi-passive tag.

7. The method according to claim 1 or 2, wherein the obtaining, by a core network element, first information of a target terminal device comprises:
receiving, by the core network element, a service request from an application function network element, wherein the service request comprises the first information.

8. The method according to any one of claims 1 to 7, wherein when the first information comprises one or more of the TID of the target terminal device, the chip type information of the target terminal device, and the factory mark information of the target terminal device, before the sending, by the core network element, the second information and indication information of the first operation to the target terminal device, the method further comprises:
obtaining, by the core network element, a correspondence between the first information and the storage area corresponding to the first operation in the target terminal device; and
determining, by the core network element, the second information based on the correspondence and the first information.

9. The method according to claim 8, wherein the obtaining, by the core network element, a correspondence between the first information and the storage area corresponding to the first operation in the target terminal device comprises:
obtaining, by the core network element, the locally stored correspondence between the first information and the storage area corresponding to the first operation in the target terminal device; or
obtaining, by the core network element from a second network element, the correspondence between the first information and the storage area corresponding to the first operation in the target terminal device.

10. The method according to any one of claims 1 to 7, wherein when the first information comprises one or more of the TID of the target terminal device, the chip type information of the target terminal device, and the factory mark information of the target terminal device, before the sending, by the core network element, the second information and indication information of the first operation to the target terminal device, the method further comprises:
sending, by the core network element, the first information to a third network element; and
receiving, by the core network element, the second information determined by the third network element based on the first information.

11. The method according to any one of claims 1 to 7, wherein when the first information comprises the storage area information of the target terminal device, before the sending, by the core network element, the second information and indication information of the first operation to the target terminal device, the method further comprises:
determining, by the core network element, the second information based on the storage area information of the target terminal device and the indication information of the first operation.

12. The method according to any one of claims 1 to 11, wherein the sending, by the core network element, the second information and indication information of the first operation to the target terminal device comprises:
sending, by the core network element, an operation message to the target terminal device, wherein the operation message indicates to perform the first operation on the target terminal device, and the operation message comprises the second information and the indication information of the first operation.

13. The method according to any one of claims 1 to 12, wherein the first operation is one or more of a read operation, a write operation, an access operation, a kill operation, a lock operation, a block write operation, a block erase operation, and an electronic product code EPC write operation.

14. The method according to any one of claims 1 to 13, wherein the second information comprises an identifier of the storage area corresponding to the first operation in the target terminal device.

15. The method according to claim 14, wherein the second information further comprises at least one of the following:
a pointer value, indicating a position at which the first operation starts to be performed in the storage area;
a length, indicating a length of data for performing the first operation in the storage area; and
a mask or a wildcard mask, indicating a mask or a wildcard mask used to perform the first operation in the storage area.

16. A communication method, comprising:
sending, by a target terminal device, first information to a core network element, wherein the first information is used to determine second information, and the second information indicates a storage area corresponding to a first operation in the target terminal device;
receiving, by the target terminal device, the second information and indication information of the first operation from the core network element; and
sending, by the target terminal device to the core network element, a result of performing the first operation by the target terminal device based on the second information.

17. The method according to claim 16, wherein the first information comprises at least one of the following:
a tag identifier TID of the target terminal device, chip type information of the target terminal device, factory mark information of the target terminal device, and storage area information of the target terminal device.

18. The method according to claim 16 or 17, wherein before the sending, by a target terminal device, first information to a core network element, the method further comprises: receiving, by the target terminal device, a first message sent by the core network element through an access network device, wherein the first message is used to trigger the target terminal device to initiate a random access procedure; and
the sending, by a target terminal device, first information to a core network element comprises: sending, by the target terminal device, a registration request to the core network element, wherein the registration request comprises the first information.

19. The method according to claim 16 or 17, wherein before the sending, by a target terminal device, first information to a core network element, the method further comprises: receiving, by the target terminal device, a read command from the core network element, wherein the read command is used to read the first information in the target terminal device; and
the sending, by a target terminal device, first information to a core network element comprises: sending, by the target terminal device, a read command response to the core network element, wherein the read command response comprises the first information.

20. The method according to claim 19, wherein before the receiving a read command from the core network element, the method further comprises:
sending, by the target terminal device, tag type indication information of the target terminal device to the core network element, wherein the tag type indication information indicates that the target terminal device is a passive tag or a semi-passive tag.

21. The method according to any one of claims 16 to 20, wherein the receiving, by the target terminal device, the second information and indication information of the first operation from the core network element comprises:
receiving, by the target terminal device, an operation message from the core network element, wherein the operation message indicates to perform the first operation on the target terminal device, and the operation message comprises the second information and the indication information of the first operation.

22. The method according to any one of claims 16 to 21, wherein the first operation is one or more of a read operation, a write operation, an access operation, a kill operation, a lock operation, a block write operation, a block erase operation, and an electronic product code EPC write operation.

23. The method according to any one of claims 16 to 22, wherein the second information comprises an identifier of the storage area corresponding to the first operation in the target terminal device.

24. The method according to claim 23, wherein the second information further comprises at least one of the following:
a pointer value, indicating a position at which the first operation starts to be performed in the storage area;
a length, indicating a length of data for performing the first operation in the storage area; and
a mask or a wildcard mask, indicating a mask or a wildcard mask used to perform the first operation in the storage area.

25. A communication apparatus, comprising:
a communication unit, configured to receive and send data; and
a processing unit, configured to perform the method according to any one of claims 1 to 24 by using the communication unit.

26. A communication system, comprising:
a core network element, configured to implement the method according to any one of claims 1 to 15; and
a terminal device, configured to implement the method according to any one of claims 16 to 24.

27. A computer-readable storage medium, wherein the computer-readable storage medium stores a computer program, and when the computer program is run on a computer, the computer is enabled to perform the method according to any one of claims 1 to 24.

28. A chip, wherein the chip is coupled to a memory, and the chip reads a computer program stored in the memory, to perform the method according to any one of claims 1 to 24.
